# EUROPEAN PATENT SPECIFICATION

(11) **EP 1 831 952 B1**
(45) Date of publication and mention of the grant of the patent: **23.12.2009**
(21) Application number: 05855875.0
(22) Date of filing: 23.12.2005
(51) Int. Cl.: H01M 10/40, H01M 4/50, H01M 4/52, H01M 4/58, H01M 4/02

(54) **LITHIUM-ION SECONDARY BATTERY**
LITHIUMIONEN-SEKUNDÄRBATTERIE
BATTERIE SECONDAIRE AUX IONS LITHIUM

(30) Priority: 28.12.2004 US 639275 P; 12.05.2005 US 680271 P; 14.07.2005 US 699285 P
(43) Date of publication of application: 12.09.2007
(73) Proprietor: Boston-Power, Inc., Westborough MA 01581 (US)
(72) Inventor: LAMPE-ONNERUD, Christina, M., Framingham, MA 01702 (US)
(74) Representative: Kirkham, Nicholas Andrew
(86) International application number: PCT/US2005/047383
(87) International publication number: WO 2006/071972

(56) References cited:
- EP-A- 0 762 521
- EP-A- 1 022 792
- EP-A- 1 100 133
- EP-A- 1 383 183
- WO-A-98/24131
- WO-A-2004/019433
- WO-A-2004/105162
- CN-A- 1 700 498
- US-A- 6 159 636
- US-A1- 2003 073 002
- US-A1- 2004 096 743
- US-A1- 2004 197 654
- US-A1- 2005 186 474
- PATENT ABSTRACTS OF JAPAN vol. 2003, no. 12, 5 December 2003 (2003-12-05) & JP 2004 006094 A (NEC CORP.), 8 January 2004 (2004-01-08)
- PATENT ABSTRACTS OF JAPAN vol. 2002, no. 07, 3 July 2002 (2002-07-03) & JP 2002 075369 A (KEE K.K.), 15 March 2002 (2002-03-15)
- PATENT ABSTRACTS OF JAPAN vol. 2000, no. 26, 1 July 2002 (2002-07-01) & JP 2001 243943 A (TOSHIBA CORP.), 7 September 2001 (2001-09-07)
- PATENT ABSTRACTS OF JAPAN vol. 2003, no. 11, 5 November 2003 (2003-11-05) & JP 2003 197180 A (SANYO ELECTRIC CO., LTD.), 11 July 2003 (2003-07-11)
- PATENT ABSTRACTS OF JAPAN vol. 2002, no. 06, 4 June 2002 (2002-06-04) & JP 2002 042815 A (KEE K.K.), 8 February 2002 (2002-02-08)
- PATENT ABSTRACTS OF JAPAN vol. 2002, no. 03, 3 April 2002 (2002-04-03) & JP 2001 319647 A (KYUSHU ELECTRIC POWER CO., INC.), 16 November 2001 (2001-11-16)
- PATENT ABSTRACTS OF JAPAN vol. 2000, no. 04, 31 August 2000 (2000-08-31) & JP 2000 012030 A (SHIN KOBE ELECTRIC MACH CO., LTD.), 14 January 2000 (2000-01-14)

## Description

### BACKGROUND OF THE INVENTION

Rechargeable batteries, such as lithium-ion rechargeable batteries, are widely used as electrical power for battery-powered portable electronic devices, such as cellular telephones, portable computers, camcorders, digital cameras, PDAs and the like. A typical lithium-ion battery pack for such portable electronic devices employs multiple cells that are configured in parallel and in series. For example, a lithium-ion battery pack may include several blocks connected in series where each block includes one or more cells connected in parallel. Each block typically has an electronic control that monitors voltage levels of the block In an ideal configuration, each of the cells included in the battery pack is identical. However, when cells are aged and cycled, cells tend to deviate from the initial ideal conditions, resulting in an unbalanced cell pack (e.g., unidentical capacity, impedance, discharge and charge rate). This unbalance among the cells may cause over-charge or over-discharge during normal operation of the rechargeable batteries, and in turn can impose safety concerns, such as explosion (*i*.*e*., rapid gas release and possibility for fire).

Traditionally, the conventional lithium-ion rechargeable batteries have employed LiCoO₂-type materials as the active component of lithium-ion battery cathodes. For such a lithium-ion cell employing LiCoO₂-type active cathode materials to be fully charged, the charge voltage is usually 4.20V. With lower charging voltage, the capacity is lower, which corresponds to lower utilization of active LiCoO₂ materials. On the other hand, with higher charging voltage, the cell is less safe. In general, it is a challenge for LiCoO₂-based lithium-ion cells to have a high capacity, for example higher than about 3 Ah due to a high safety concern. In order to minimize the safety concern, lowering the charge voltage is one option. However, this will lower the cell capacity, and in turn lower cell energy density. To obtain high capacity, increasing the number of cells in one battery pack may be another option rather than increasing the charge voltage. However, the increase in the number of cells can result in increased probability of unbalance among the cells, which can cause over-charge or over-discharge during normal operation, as discussed above.

US 2005/186474 A1 discloses positive electrodes for lithium rechargeable batteries, comprising a current collector coated by two layers of active materials, wherein the active material for the first layer is one or more active materials selected from spinel lithium manganese oxide and spinel lithium manganese oxide derivatives, and the active material for the second layer is one or more active materials selected from lithium cobalt oxide, lithium cobalt oxide derivatives, lithium nickel oxide and lithium nickel oxide derivatives. CN-A-1 700 498 describes a lithium ion secondary battery comprising positive and negative electrodes, an electrolyte and an isolation film, wherein the electrode active materials are composed of spinel lithium manganate and layered lithium nickelate with mass proportion of one to nine and of grain radius proportion of 1.5:8.

EP-A-1 022 792 discloses a positive electrode for a non-aqueous electrolyte cell comprising a mixture of spinel-type lithium manganese oxide represented by a formula Li_{1+X}Mn_{2-Y}O₄ and at least either one of lithium cobalt oxide represented by a formula Li_{1+Z}CoO₂ or lithium nickel oxide represented by a formula Li_{1+Z}NiO₂.

EP-A-0 762 521 discloses a lithium ion secondary battery, wherein the positive electrode contains a lithium manganate spinel of formula of Li_{y}Mn₂O₄ as main active material and a lithium cobalt oxide having the formula of LiₓCoO₂ or lithium nickel or cobalt-nickel oxide having the formula of LiₓCo_{y}Ni_{z}O₂, as a sub-active material.

JP 2004 006094 A discloses a positive electrode for lithium-ion secondary battery containing (a) an aluminum-substituted lithium manganate spinel expressed by formula Li₁₊ₓMn_{2-x-y}Al_{y}O_{4+z}, and (b) a cobalt/aluminum-substituted lithium nickelate of formula LiNi_{1-x-y}CoₓAl_{y}O₂ (as for example LiNi_{0.8}Co_{0.15}Al_{0.05}O₂).

Positive electrode active materials for lithium-ion secondary batteries, comprising a mixture of a lithium nickelate compound with a lithium manganate spinel are also described in WO 2004/105162 A (corresponding to US2006/035151 A1), WO 2004/019433 A (corresponding to EP-A-1 538 686), EP-A-1 383 183, JP 2002 075369 A, JP 2001 243943 A, US-A-6 159 636 and WO 98/24131 A.

Similarly, JP 2003 197180 A, JP 2002 042815 A, JP 2001 319647 A, EP-A-1 100 133 and JP 2000 012030 A all disclose positive electrode active materials for lithium-ion secondary batteries, which comprise a mixture of a lithium cobaltate compound with a lithium manganate spinel.

US 2003/073002 A1 describes a non-aqueous electrolyte secondary battery comprising a positive electrode containing, as active material, a mixture of a lithium-containing complex oxide having a layered crystalline structure expressed by general formula LiₓMnₐCo_{b}O₂ together with either a lithium cobalt oxide or a spinel-type lithium manganate. US 2004/197654 A1 discloses electrode active materials comprising two or more groups of particles having differing chemical compositions, wherein each group of particles comprises a material selected from: (a) materials of the general formula A¹ₐM¹_{b}(XY₄)_{c}Z_{d}, in particular olivine compounds, and (b) materials of the formula A²ₑM²_{f}O_{g}, in particular lithium nickel oxide or lithium cobalt oxide compounds, wherein (i) A¹ and A² are Li, Na or K; (ii) M¹ and M² comprise a transition metal; (iii) XY₄ is a phosphate or similar moiety and (iv) Z is OH or halogen.

US 2004/096743 A1 describes a positive active material comprising one or more particles of lithium nickelate having a surface and having a formula Li_{y}Ni_{1-z}M'₂O₂ (wherein M' is selected from the group consisting of Fe, Co, Mn, Cu, Zn, Al, Sn, B, Ga, Cr, V, Ti, Mg, Ca, Sr and mixtures thereof) and an olivine compound having an olivine-type crystal structure and having a formula LiₓMPO₄ (wherein M is selected from a group consisting of Fe, Mn, Co, Ni, Cu, Zn, Mg and mixtures thereof), wherein the surface of the particles of lithium nickelate are covered with the olivine compound.

The largest mainstream cell that is typically used in the industry currently is a so-called "18650" cell. This cell has an outer diameter of about 18 mm and a length of 65 mm. Typically, the 18650 cell utilizes LiCoO₂ and has a capacity between 1800 mAh and 2400 mAh but cells as high as 2600 mAh are currently being used. It is generally believed that it is not safe to use LiCoO₂ in a larger cell than the 18650 cell because of a safety concern associated with LiCoO₂. Other cells larger than the 18650 cells exist in the art, for example, "26650" cells having an outer diameter of about 26 mm and a length of 65 mm. The 26650 cells typically do not contain LiCoO₂ and have worse performance characteristics in terms of Wh/kg and Wh/L than the 18650 cells employing LiCoO₂.

Therefore, there is a need to develop new active cathode materials for lithium-ion batteries that minimize or overcome the above-mentioned problems. In particular, there is a need to develop new active cathode materials that can enable manufacturing large batteries, for example, larger than the conventional LiCoO₂-based batteries (e.g., 18650 cells) in volume and/or Ah/cell.

### SUMMARY OF THE INVENTION

The present invention is generally directed to (1) an active cathode material that includes a mixture of at least one of a lithium cobaltate and a lithium nickelate; and at least one of a manganate spinel and an olivine compound, (2) a lithium-ion battery having such an active cathode material, (3) a method of forming such a lithium-ion battery, (4) a battery pack comprising one or more cells, each of the cells including such an active cathode material, and (5) a system that includes such a battery pack or lithium-ion battery and a portable electronic device.

In one embodiment, the present invention is directed to an active cathode material that includes a mixture of electrode materials. The mixture includes: at least one of a lithium cobaltate and a lithium nickelate; and at least one of a manganate spinel and an olivine compound. The manganate spinel is represented by an empirical formula of Li₍₁₊ₓ₁₎(Mn_{1-y1}A'_{y1})₂₋ₓ₁O_{z1} where:
x1 is equal to or greater than 0.01 and equal to or less than 0.3;
y1 is greater than 0.0 and equal to or less than 0.3;
z1 is equal to or greater than 3.9 and equal to or less than 4.1; and
A' is at least one member of the group consisting of magnesium, aluminum, cobalt, nickel and chromium.
The olivine compound is represented by an empirical formula of Li₍₁₋ₓ₂)A"ₓ₂MPO₄ where:
x2 is equal to or greater than 0.05 and equal to or less than 0.2, or
x2 is equal to or greater than 0.0 and equal to or less than 0.1; and
M is at least one member of the group consisting of iron, manganese, cobalt and magnesium; and
A" is at least one member of the group consisting of sodium, magnesium, calcium, potassium, nickel and niobium.

In another embodiment, the present invention is directed to an active cathode material that includes a mixture including: a lithium nickelate selected from the group consisting of LiCoO₂-coated LiNi_{0.8}Co_{0.15}Al_{0.05}O₂, and Li(Ni_{1/3}Co_{1/3}Mn_{1/3})O₂; and a manganate spinel represented by an empirical formula of Li₍₁₊ₓ₇₎Mn_{2-y7}O_{z7} where x7 and y7 are each independently equal to or greater than 0.0 and equal to or less than 1.0; and z7 is equal to or greater than 3.9 and equal to or less than 4.2.

The present invention is also directed to a lithium-ion battery having a cathode that includes an active cathode material as described above. The active cathode material includes a mixture of electrode materials. In one embodiment, the mixture includes: at least one of a lithium cobaltate and a lithium nickelate; and at least one of a manganate spinel and an olivine compound. The manganate spinel and olivine compound are as described above. In another embodiment, the mixture includes a mixture including: a lithium nickelate selected from the group consisting of a lithium cobaltate, LiCoO₂-coated LiNi_{0.8}Co_{0.15}Al_{0.05}O₂, and Li(Ni_{1/3}Co_{1/3}Mn_{1/3})O₂; and a manganate spinel as described above. The battery has a capacity greater than about 3.0 Ah/cell.

Also included in the present invention is a battery pack that includes one or more cells, preferably a plurality of cells. The cell(s) of the battery pack includes an active cathode material as described above. The active cathode material includes a mixture of electrode materials. In one embodiment, the mixture includes: at least one of a lithium cobaltate and a lithium nickelate; and at least one of a manganate spinel and an olivine compound. The manganate spinel and olivine compound are as described above. In another embodiment, the mixture includes a mixture including: a lithium nickelate selected from the group consisting of a lithium cobaltate, LiCoO₂-coated LiNi_{0.8}Co_{0.15}Al_{0.05}O₂, and Li(Ni_{1/3}Co_{1/3}Mn_{1/3})O₂; and a manganate spinel as described above. Preferably the battery pack includes a plurality of cells and at least one cell of the cells has a capacity greater than about 3.0 Ah/cell.

A method of forming a lithium-ion battery having a cathode that includes an active cathode material as described above is also included in the present invention. The method includes forming an active cathode material as described above. The method further includes the steps of forming a cathode electrode with the active cathode material; and forming an anode electrode in electrical contact with the cathode electrode via an electrolyte, thereby forming a lithium-ion battery

A system that includes a portable electronic device and a battery pack as described above is also included in the present invention.

The lithium-ion batteries of the invention, which employ a novel blend of two or more different types of active cathode materials in the positive electrode, have safer chemistry characteristics than conventional lithium-ion batteries that solely employ LiCoO₂ as the active material of the lithium-ion battery cathodes. In particular, an active cathode material of the invention enables manufacturing of large batteries, e.g., larger than the 18650 cells, for use in these mobile devices partly due to its safety and high capacity in terms of energy density and power density. The present invention also allows for economical manufacturing of larger cells compared to what is common in today's industry (e.g., the 18650 cells), in part due to lower cathode costs and in part due to lower electronics costs. These higher capacity type cells allow lower cost without sacrificing overall safety. These higher capacity type cells can in turn minimize the number of electronic components needed for charge control, which allows lowering of electronic component costs overall for a battery pack utilizing multiple cells connected in series or parallel.

The present invention can be used in mobile electronic devices such as portable computers, cell phones and portable power tools. The present invention can also be used in batteries for hybrid electric vehicles.

### BRIEF DESCRIPTION OF THE DRAWINGS

FIG. 1 is a sectional view of a cylindrical-shaped lithium-ion battery typical of that used commercially today and specifically representative of an 18650 type lithium-ion battery.
FIG. 2 is a schematic representation of an example of an oblong-shaped can for a lithium-ion battery of the invention.
FIG. 3 is a schematic circuitry showing how cells in the invention are preferably connected when arranged together in a battery pack.
FIG. 4 is a photographic top, see-through view of a battery pack of the invention.
FIGs. 5(a)-5(d) are schematic drawings comparing different spatial utilizations of different battery form factors including the battery of this invention (FIG 5(a)) and comparison examples typical of commercial batteries used today including two 18650 cells in parallel (FIG 5(b)), a prismatic cell containing a wound jelly roll electrode structure (FIG 5(c)) and a prismatic cell containing a stacked electrode structure (FIG 5(d)).
FIG. 6 is a graph showing typical charge curves of a battery of the invention and a control battery at room temperature.
FIG. 7 is a graph showing relative capacity retention during charge-discharge cycling at room temperature of a battery of the invention and two control batteries: cycling conditions: constant charge constant voltage (CCCV) charging using 0.7C constant charge followed by constant voltage charge at 4.2 V and then 1C discharge to 2.75 V.
FIG. 8 is a graph showing relative capacity retention during charge-discharge cycling at 60 °C of a battery of the invention and a control battery under the conditions described in FIG. 7.
FIG. 9 is a graph showing the rate capability for an average and standard deviation of eight batteries of the invention and two control commercial 18650 batteries where the batteries are charged under the charge conditions described in FIG. 7 and discharged to 2.75 V at the rates indicated in the figure.

### DETAILED DESCRIPTION OF THE INVENTION

The foregoing and other objects, features and advantages of the invention will be apparent from the following more particular description of preferred embodiments of the invention, as illustrated in the accompanying drawings in which like reference characters refer to the same parts throughout the different views. The drawings are not necessarily to scale, emphasis instead being placed upon illustrating the principles of the invention.

In one embodiment, the present invention relates to an active cathode material mixture that can be employed in an electrode of a lithium-ion battery that allows lithium to be reversibly intercalated and extracted. The active cathode material comprises a mixture that includes: at least one of a lithium cobaltate and a lithium nickelate; and at least one of a manganate spinel and an olivine compound.

A lithium nickelate that can be used in the invention includes at least one modifier of either the Li atom or Ni atom, or both. As used herein, a "modifier" means a substituent atom that occupies a site of the Li atom or Ni atom, or both, in a crystal structure of LiNiO₂. In one embodiment, the lithium nickelate includes only a modifier of Li atom ("Li modifier"). In another embodiment, the lithium nickelate includes only a modifier ofNi atom ("Ni modifier"). In yet another embodiment, the lithium nickelate includes both of the Li and Ni modifiers. Examples of the Li modifier include barium (Ba), magnesium (Mg), calcium (Ca) and strontium (Sr). Examples of the Ni modifier include those modifiers for Li and in addition aluminum (Al), manganese (Mn) and boron (B). Other examples of the Ni modifier include cobalt (Co) and titanium (Ti). Preferably, the lithium nickelate is coated with LiCoO₂. The coating can be a gradient coating or a spot-wise coating.

One particular type of a lithium nickelate that can be used in the invention is represented by an empirical formula of Liₓ₃Ni_{1-z3}M'_{z3}O₂ where 0.05<x3<1.2 and 0<z3<0.5, and M' is one or more elements selected from a group consisting of Co, Mn, Al, B, Ti, Mg, Ca and Sr. Preferably, M' is one or more elements selected from a group consisting of Mn, Al, B, Ti, Mg, Ca and Sr.

Another particular type of a lithium nickelate that can be used in the invention is represented by an empirical formula of Liₓ₄A^{*}ₓ₅Ni_{(1-y4-z4)}Co_{y4}Q_{z4}Oₐ where x4 is equal to or greater than about 0.1 and equal to or less than about 1.3; x5 is equal to or greater than 0.0 and equal to or less than about 0.2; y4 is equal to or greater than 0.0 and equal to or less than about 0.2; z4 is equal to or greater than 0.0 and equal to or less than about 0.2; a is greater than about 1.5 and less than about 2.1; A^{*} is at least one member of the group consisting of barium (Ba), magnesium (Mg) and calcium (Ca); and Q is at least one member of the group consisting of aluminum (Al), manganese (Mn) and boron (B). Preferably, y4 is greater than zero. In one preferred embodiment, x5 is equal to zero, and z4 is greater than 0.0 and equal to or less than about 0.2. In another embodiment, z4 is equal to zero, and x5 is greater than 0.0 and equal to or less than about 0.2. In yet another embodiment, x5 and z4 are each independently greater than 0.0 and equal to or less than about 0.2. In yet another embodiment, x5, y4 and z4 are each independently greater than 0.0 and equal to or less than about 0.2. Various examples of lithium nickelates where x5, y4 and z4 are each independently greater than 0.0 and equal to or less than about 0.2 can be found in U.S. Patent Nos. 6,855,461 and 6,921,609.

A specific example of the lithium nickelate is LiNi_{0.8}Co_{0.15}Al_{0.05}O₂. A preferred specific example is LiCoO₂-coated LiNi_{0.8}Co_{0.15}Al_{0.05}O₂ The spot-wise coated cathode has LiCoO₂ not fully coated on top of a nickelate core particle, so that the higher reactivity nickelate is deactivated and hence safer. The composition of LiNi_{0.8}Co_{0.15}Al_{0.05}O₂ coated with LiCoO₂ can naturally deviate slightly in composition from the 0.8:0.15:0.05 ratio between Ni:Co:Al. Deviation may be approximately 10-15% for the Ni, 5-10% for Co and 2-4% for Al.

Another specific example of the lithium nickelate is Li_{0.97}Mg_{0.03}Ni_{0.9}Co_{0.1}O₂ A preferred specific example is LiCoO₂-coated Li_{0.97}Mg_{0.03}Ni_{0.9}Co_{0.1}O₂. The spot-wise coated cathode has LiCoO₂ not fully coated on top of a nickelate core particle, so that the higher reactivity nickelate is deactivated and hence safer. The composition of Li_{0.97}Mg_{0.03}Ni_{0.9}Co_{0.1}O₂ coated with LiCoO₂ can naturally deviate slightly in composition from the 0.03:0.9:0.1 ratio between Mg:Ni:Co. Deviation maybe approximately 2-4% for Mg, 10-15% for Ni and 5-10% for Co.

Another preferred nickelate that can be used in the present invention is Li(Ni_{1/3}Co_{1/3}Mn_{1/3})O₂, which is also called "333-type nickelate." This 333-type nickelate can be optionally coated with LiCoO₂ as described above.

Suitable examples of lithium cobaltates that can be used in the invention include LiCoO₂ that is modified by at least one of modifiers of Li and Co atoms. Examples of the Li modifiers are as described above for Li for LiNiO₂. Examples of the Co modifiers include the modifiers for Li and aluminum (Al), manganese (Mn) and boron (B). Other examples include nickel (Ni) and titanium (Ti). Particularly, lithium cobaltates represented by an empirical formula of Liₓ₆M'_{(1-y6)}Co_{(1-z6)}M"_{z6}O₂, where x6 is greater than 0.05 and less than 1.2; y6 is equal to or greater than 0 and less than 0.1, z6 is equal to or greater than 0 and less than 0.5; M' is at least one member of magnesium (Mg) and sodium (Na) and M" is at least one member of the group consisting of manganese (Mn), aluminum (Al), boron (B), titanium (Ti), magnesium (Mg), calcium (Ca) and strontium (Sr), can be used in the invention.

Another example of lithium cobaltates that can be used in the invention includes LiCoO₂,

It is particularly preferred that the compounds have a spherical-like morphology as this improves packing and production characteristics.

Preferably, a crystal structure of each of the lithium cobaltate and lithium nickelate is independently a R-3m type space group (rhombohedral, including distorted rhombohedral). Alternatively, a crystal structure of the lithium nickelate can be in a monoclinic space group (e.g., P2/m or C2/m). In a R-3m type space group, the lithium ion occupies the "3a" site (x=0, y=0 and z=0) and the transition metal ion (*i*.*e*., Ni in a lithium nickelate and Co in a lithium cobaltate) occupies the "3b" site (x=0, y=0, z=0.5). Oxygen is located in the "6a" site (x=0, y=0, z=z0, where z0 varies depending upon the nature of the metal ions, including modifier(s) thereof).

Olivine compounds that can be used in the invention are generally represented by a general formula Li₁₋ₓ₂A"ₓ₂MPO₄, where x2 is equal to or greater than 0.05, or x2 is equal to or greater than 0.0 and equal to or greater than 0.1; M is one or more elements selected from a group consisting of Fe, Mn, Co, or Mg; and A" is selected from a group consisting of Na, Mg, Ca, K, Ni, Nb. Preferably, M is Fe or Mn. More preferably, LiFePO₄ or LiMaPO₄, or both are used in the invention. In a preferred embodiment, the olivine compounds are coated with a material having high electrical conductivity, such as carbon. In a more preferred embodiment, carbon-coated LiFePO₄ or carbon-coated LiMnPO₄ is used in the invention. Various examples of olivine compounds where M is Fe or Mn can be found in U.S. Patent No. 5,910,382).

The olivine compounds have typically a small change in crystal structure upon charging/discharging, which makes the olivine compounds superior in terms of cycle characteristic. Also, safety is generally high even when a battery is exposed to a high temperature environment Another advantage of the olivine compounds (e.g., LiFePO₄ and LiMnPO₄) is their relatively low cost

Manganate spinel compounds have a manganese base, such as LiMn₂O₄. While the manganate spinel compounds typically have low specific capacity (e.g., in a range of about 120 to 130 mAh/g), they have high power delivery when formulated into electrodes and are typically safe in terms of chemical reactivity at higher temperatures. Another advantage of the manganate spinel compounds is their relatively low cost.

One type of manganate spinel compounds that can be used in the invention is represented by an empirical formula of Li₁₊ₓ₁(Mn_{1-y1}A'_{y1})₂₋ₓ₁O_{z1}, where A' is one or more of Mg, Al, Co, Ni and Cr, x1 is equal to or greater than 0.01 and equal to or less than 0.3; y1 is greater than 0.0 and equal to or less than 0.3; z1 is equal to or greater than 3.9 and equal to or less than 4.1. Preferably, A' includes a M³⁺ ion, such as Al³⁺, Co³⁺, Ni³⁺ and Cr³⁺, more preferably Al³⁺. One specific example includes LiMn_{1.9}Al_{0.1}O₄. The manganate spinel compounds of Li₁₊ₓ₁(Mn_{1-y1}A'_{y1})₂₋ₓ₁O_{z1} can have enhanced cyclability and power compared to those of LiMn₂O₄. Examples of this type of manganate spinel include Li₁₊ₓMn₂₋ₓO₄, and its variations with A1 and Mg modifiers. Various examples of manganate spinel compounds of the type Li₁₊ₓ₁(Mn_{1-y1}A'_{y1})₂₋ₓ₁o_{z1} can be found in U.S. Patent Nos. 4,366,215, 5,196,270, 5,316,877.

The active cathode materials of the invention can be prepared by mixing two or more active cathode components described above (*i*.*e*., a lithium cobaltate, a lithium nickelate, a manganate spinel and an olivine compound), preferably in a powdered form. Generally, the olivine compounds, such as LiFePO₄, manganate spinel compounds, such as Li₁₊ₓ₁(Mn_{1-y1}A'_{y1})₂₋ₓ₁O_{z1}, and lithium nickelates, such as Li(Ni_{1/3}Co_{1/3}Mn_{1/3})O₂, have high safety. Generally, lithium cobaltates, such as LiCoO₂ and lithium nickelates, such as Li(Ni_{1/3}Co_{1/3}Mn_{1/3})O₂ and Liₓ₄Ni_{1-y4-z4}Co_{y4}Q_{z4}Oₐ-type compounds have a high-energy density. General properties of some cathode components for the cathode materials of the invention are summarized in Table 1.

**Table 1. Typical Attributes of Active Cathode Materials of the Invention**

| **Cathode Material** | **Density** **(g/cc)** | **C/20 Capacity** **(mAh/g)** | **1C Capacity** **(mAh/g)** | **1^{st} Cycle Efficiency** **(%)** |
|---|---|---|---|---|
| lithium cobaltate | 5.05 | 150 | 145 | 96 |
| lithium nickelate | 4.80 | 210 | 180 | 92 |
| olivine (M = Fe) | 3.30 | 155 | 140 | 95 |
| manganate spinel | 4.20 | 120 | 115 | 94 |

Characteristics of the cathode materials of the invention relate to capacity, cyclability, and safety. For example, the cathode materials of the invention can exhibit different capacities depending on the charge/discharge rate and other external conditions, such as electrolyte choice and electrode formulation. "Capacity" is defined herein as the number of Li ions that can reversibly be removed from the crystal structures of lithium-based materials, such as those of the invention. "Reversibility," as defined herein, means that the structure substantially maintains its integrity and that Li can be intercalated back to restore the initial crystal structure. In theory, this is the definition of capacity at an infinitely small rate. "Safety," as defined herein, means structural stability or structural integrity; if a material decomposes during cycling or is easily decomposed or causes gassing at elevated temperatures, the material is considered unsafe, particularly if the decomposition or gassing leads to initiation of thermal runaway behavior inside the cell or produces high internal pressure. Polarization behavior adds yet another dimension to capacity and the effects of polarization behavior to performance of a lithium-ion battery are determined by the interaction between the lithium-ion cell and the control electronics of the battery pack or application device using the lithium-ion cell.

Formulation of an electrode suitable for high energy and power, and sufficient safety, can be achieved by a specific ratio of components (*i*.*e*., a lithium cobaltate, a lithium nickelate, a manganate spinel and an olivine compound) of the active cathode materials of the invention.

In one embodiment, an active cathode material of the invention includes a lithium nickelate that includes at least one modifier of either the Li atom or Ni atom, or both. Preferably, the lithium nickelate is represented by an empirical formula of Liₓ₃Ni_{(1-z3)}M'_{z3}O₂ described above. Alternatively, the lithium nickelate is represented by an empirical formula of Liₓ₄A^{*}ₓ₅Ni_{(1-y4-z4)}Co_{y4}Q_{z4}Oₐ described above. In a specific example, the lithium nickelate is represented by an empirical formula of Liₓ₄A^{*}ₓ₅Ni_{(1-y4-z4)}Co_{y4}Q_{z4}Oₐ where x5, y4 and z4 are each independently greater than 0.0 and equal to or less than about 0.2. Specific examples of the lithium nickelate are as described above. '

In a second embodiment, an active cathode material of the invention includes a lithium cobaltate represented by an empirical formula of Liₓ₆Co_{(1-z6)}M"_{z6}O₂ described above. Specific examples of the lithium cobaltate are as described above.

In a third embodiment, an active cathode material of the invention includes an olivine compound represented by an empirical formula of Li₍₁₋ₓ₂₎A"ₓ₂MPO₄ described above. Specific examples of the olivine compound are as described above. In a preferred embodiment, M is iron or magnesium. In a preferred embodiment, the olivine compound is coated with carbon.

In a fourth embodiment, an active cathode material of the invention includes a lithium cobaltate, such as LiCoO₂, and a manganate spinel. The lithium cobaltate and manganate spinel, including specific examples thereof, are as described above. Preferably, the lithium cobaltate, and manganate spinel are in a ratio of lithium cobaltate:manganate spinel between about 0.8:0.2 to about 0.4:0.6. In one example of the fourth embodiment, the manganate spinel is represented by Li₁₊ₓ₁(Mn_{1-y1}A'_{y1})₂₋ₓ₁O_{z1}. In another example of the fourth embodiment, the manganate spinel is represented by Li₁₊ₓ₇Mn₂₋ₓ₇O₄, preferably LiMn₂O₄.

In a fifth embodiment, an active cathode material of the invention includes a lithium nickelate and a manganate spinel represented by Li₁₊ₓ₁(Mn_{1-y1}A'_{y1})₂₋ₓ₁O_{z1} described above. The lithium nickelate and manganate spinel, including specific examples thereof, are as described above. Preferably, the lithium nickelate and manganate spinel are in a ratio of lithium nickelate: manganate spinel between about 0.9:0.1 to about 0.3:0.7. In one example of the fifth embodiment, the lithium nickelate is Li(Ni_{1/3}Co_{1/3}Mn_{1/3})O₂, LiNi_{0.8}Co_{0.15}Al_{0.05}O₂ or Li_{0.97}Mg_{0.03}Ni_{0.9}Co_{0.1}O₂. Preferably, the lithium nickelate is LiCoO₂-coated, LiNi_{0.8}Co_{0.15}Al_{0.05}O₂ or Li_{0.97}Mg_{0.03}Ni_{0.9}Co_{0.1}O₂. When LiCoO₂-coated, LiNi_{0.8}Co_{0.15}Al_{0.05}O₂ or Li_{0.97}Mg_{0.03}Ni_{0.9}Co_{0.1}O₂ is used, the lithium nickelate and manganate spinel are preferably in a ratio of lithium nickelate-to-manganate spinel between about 0.9:0.1 to about 0.3:0.7. When Li(Ni_{1/3}Co_{1/3}Mn_{1/3})O₂ is used, the lithium nickelate and manganate spinel are preferably in a ratio of lithium nickelate: manganate spinel between about 0.7:0.3 to about 0.3:0.7.

In a sixth embodiment, an active cathode material of the invention includes at least one lithium nickelate selected from the group consisting of Li(Ni_{1/3}Co_{1/3}Mn_{1/3})O₂ and LiCoO₂-coated LiNi_{0.8}Co_{0.15}Al_{0.05}O₂; and a manganate spinel represented by Li₁₊ₓ₇Mn_{2-y7}O_{z7}, preferably LiMn₂O₄. Preferably, the lithium nickelate and manganate spinel are in a ratio of lithium nickelate:manganate spinel between about 0.9:0.1 to about 0.3:0.7. When Li(Ni_{1/3}Co_{1/3}Mn_{1/3})O₂ is used, the lithium nickelate and manganate spinel are in a ratio of lithium nickelate:manganate spinel between about 0.9:0.1 to about 0.5:0.5.

In a seventh embodiment, the active cathode material of the invention includes a lithium cobaltate, such as LiCoO₂, a manganate spinel and a lithium nickelate. The lithium cobaltate, manganate spinel and lithium nickelate, including specific examples thereof, are as described above. Preferably, the lithium cobaltate, manganate spinel and lithium nickelate are in a ratio of lithium cobaltate:manganate spinel:lithium nickelate between about 0.05 and about 0.8: between about 0.05 and about 0.7 (e.g., between about 0.05 and about 0.3, or between about 0.3 and about 0.7): between about 0.05 and about 0.9 (e.g., between about 0.4 and about 0.9, or between about 0.05 and about 0.8). In one example, the lithium nickelate is represented by Liₓ₄A^{*}ₓ₅Ni_{(1-y4-z4)}Co_{y4}Q_{z4}Oₐ. In a second example, the lithium nickelate is represented by Liₓ₃Ni_{(1-z3)}M'_{z3}O₂, more preferably LiNi_{0.8}Co_{0.15}Al_{0.05}O₂ that is gradient- or spot-wise coated with LiCoO₂. In a third example, the lithium nickelate is Li(Ni_{1/3}Co_{1/3}Mn_{1/3})O₂. In a fourth example, the lithium nickelate includes at least one modifier of both the Li and Ni atoms, such as Liₓ₄A^{*}ₓ₅Ni_{(1-y4-z4)}Co_{y4}Q_{z4}Oₐ where x5, y4 and z4 are each independently greater than 0.0 and equal to or less than about 0.2, and the manganate spinel is represented by Li₁₊ₓ₁(Mn_{1-y1}A'_{y1})₂₋ₓ₁O_{z1}. Preferably, when Liₓ₄A^{*}ₓ₅Ni_{(1-y4-z4)}Co_{y4}Q_{z4}Oₐ and Li₁₊ₓ₁(Mn_{1-y1}A'_{y1})₂₋ₓ₁O_{z1} are used, the lithium cobaltate, manganate spinel and lithium nickelate are in a ratio of lithium cobaltate:manganate spinel: lithium nickelate between about 0.05 and about 0.30: between about 0.05 and about 0.30: between about 0.4 and about 0.9. In a fifth example, the lithium nickelate is Li(Ni_{1/3}Co_{1/3}Mn_{1/3})O₂ or optionally LiCoO₂-coated LiNi_{0.8}Co_{0.15}Al_{0.05}O₂, and the manganate spinel is represented by Li₁₊ₓ₁(Mn_{1-y1}A'_{y1})₂₋ₓ₁O_{z1}. In this fifth example, when Li(Ni_{1/3}Co_{1/3}Mn_{1/3})O₂ is used, U(Ni_{1/3}Co_{1/3}Mn_{1/3})O₂, Li₁₊ₓ₁(Mn_{1-y1}A'_{y1})₂₋ₓ₁O_{z1} and lithium cobaltate are in a ratio of Li(Ni_{1/3}Co_{1/3}Mn_{1/3})O₂ : Li₁₊ₓ₁(Mn_{1-y1}A'_{y1})₂₋ₓ₁O_{z1}: lithium cobaltate between about 0.05 and about- 0.8; between about 0.3 and about- 0.7: between about 0.05 and- about 0.8.

In an eighth embodiment, an active cathode material of the invention includes two or more lithium nickelates and a manganate spinel. The lithium nickelates and manganate spinel, including specific examples thereof, are as described above. Preferably, lithium nickelates and manganate spinel are in a ratio of lithium nickelates: manganate spinel between about 0.05 and about 0.8: between about 0.05 and about 0.9. Preferably, the manganate spinel is represented by Li₁₊ₓ₁(Mn_{1-y1}A'_{y1})₂₋ₓ₁O_{z1}. In one example, the lithium nickelates include a lithium nickelate represented by Liₓ₄A^{*}ₓ₅Ni_{(1-y4-z4)}Co_{y4}Q_{z4}Oₐ. In another example, the lithium nickelates includes a lithium nickelate represented by Liₓ₃Ni_{(1-z3)}M'_{z3}O₂. Alternatively, the lithium nickelates includes a lithium nickelate including at least one modifier of both the Li and Ni atoms, such as Liₓ₄A^{*}ₓ₅Ni_{(1-y4-z4)}Co_{y4}Q_{z4}Oₐ where x5, y4 and z4 are each independently greater than 0.0 and equal to or less than about 0.2. In a specific example, the lithium nickelates include Li(Ni_{1/3}Co_{1/3}Mn_{1/3})O₂ and a lithium nickelate represented by Liₓ₄A^{*}ₓ₅Ni_{(1-y4-z4)}Co_{y4}Q_{z4}Oₐ. In another specific example, the lithium nickelates include Li(Ni_{1/3}Co_{1/3}Mn_{1/3})O₂; and a lithium nickelate that includes at least one modifier of both the Li and Ni atoms, such as Liₓ₄A^{*}ₓ₅Ni_{(1-y4-z4)}Co_{y4}Q_{z4}Oₐ where x5, y4 and z4 are each independently greater than 0.0 and equal to or less than about 0.2. In yet another specific example, the lithium nickelates include Li(Ni_{1/3}Co_{1/3}Mn_{1/3})O₂ and a lithium nickelate represented by Liₓ₄A^{*}ₓ₅Ni_{(1-y4-z4)}Co_{y4}Q_{z4}Oₐ, and the manganate spinel is represented by Li₁₊ₓ₁(Mn_{1-y1}A'_{y1})₂₋ₓ₁O_{z1}. In this specific example, the lithium nickelates and manganate spinel are in a ratio of Li(Ni_{1/3}Co_{1/3}Mn_{1/3})O₂ : Liₓ₄A^{*}ₓ₅Ni_{(1-y4-z4)}Co_{y4}Q_{z4}Oₐ: Li₁₊ₓ₁(Mn_{1-y1}A'_{y1})₂₋ₓ₁O_{z1} between about 0.05 and about 0.8: between about 0.05 and about 0.7: between about 0.05 and about 0.9.

In a ninth embodiment, an active cathode material of the invention includes a lithium cobaltate, such as LiCoO₂, and an olivine compound represented by Li₍₁₋ₓ₂₎A"ₓ₂MPO₄ described above, preferably coated with carbon. The lithium cobaltate and olivine compound, including specific examples thereof, are as described above. Preferably, the lithium cobaltate and olivine compound are in a ratio of lithium cobaltate: olivine compound between about 0.9:0.1 to about 0.3:0.7. In one example, the olivine compound is represented by Li₍₁₋ₓ₂₎A"ₓ₂MPO₄ where M is iron or manganese, such as LiFePO₄ and LiMnPO₄. In this example, preferably, the lithium cobaltate and olivine compound are in a ratio of lithium cobaltate: olivine compound between about 0.8:0.2 to about 0.4:0.6.

In a tenth embodiment, an active cathode material of the invention includes a lithium nickelate, and an olivine compound represented by Li₍₁₋ₓ₂₎A"ₓ₂MPO₄ described above, preferably coated with carbon. The lithium nickelate and olivine compound, including specific examples thereof, are as described above. Preferably, the lithium nickelate and olivine compound are in a ration of lithium nickelate: olivine compound between about 0.9:0.1 to about 0.3:0.7. In one example, the olivine compound is represented by Li₍₁₋ₓ₂₎A"ₓ₂MPO₄ where M is iron or manganese, such as LiFePO₄ and LiMnPO₄. In a second example, the lithium nickelates include a lithium nickelate represented by Liₓ₄A^{*}ₓ₅Ni_{(1-y4-z4)}Co_{y4}Q_{z4}Oₐ. In a third example, the lithium nickelates includes a lithium nickelate represented by Liₓ₃Ni_{(1-z3)}M'_{z3}O₂. Alternatively, the lithium nickelates includes a lithium nickelate including at least one modifier of both the Li and Ni atoms, such as Liₓ₄A^{*}ₓ₅Ni_{(1-y4-z4)}Co_{y4}Q_{z4}Oₐ where x5, y4 and z4 are each independently greater than 0.0 and equal to or less than about 0.2. In a specific example, the lithium nickelate is Li(Ni_{1/3}Co_{1/3}Mn_{1/3})O₂ and the olivine compound is represented by Li₍₁₋ₓ₂₎A"ₓ₂MPO₄ where M is iron or manganese. Preferably, in the second example, the lithium nickelate and olivine compound are in a ratio of lithium nickelate: olivine compound between about 0.9:0.1 to about 0.5:0.5. In a second specific example, the lithium nickelate is represented by Liₓ₄A^{*}ₓ₅Ni_{(1-y4-z4)}Co_{y4}Q_{z4}Oₐ, preferably Liₓ₄A^{*}ₓ₅Ni_{(1-y4-z4)}Co_{y4}Q_{z4}Oₐ where x5, y4 and z4 are each independently greater than 0.0 and equal to or less than about 0.2, and the olivine compound is represented by Li₍₁₋ₓ₂)A"ₓ₂MPO₄ where M is iron or manganese. In a third specific example, the lithium nickelate is LiNi_{0.8}Co_{0.15}Al_{0.05}O₂, preferably LiCoO₂-coated LiNi_{0.8}Co_{0.15}Al_{0.05}O₂, and the olivine compound is represented by Li₍₁₋ₓ₂₎A"ₓ₂MPO₄ where M is iron or manganese. Preferably, in the third specific example, the lithium nickelate and olivine compound are in a ratio of lithium nickelate: olivine compound between about 0.9:0.1 to about 0.3:0.7.

In an eleventh embodiment, an active cathode material of the invention includes two or more lithium nickelates, and an olivine compound, preferably an olivine compound represented by Li₍₁₋ₓ₂₎A"ₓ₂MPO₄ where M is iron or manganese. The lithium nickelates and olivine compound, including specific examples thereof, are as described above. Preferably, the olivine compound is coated with carbon. In this embodiment, the lithium nickelates and olivine compound are in a ratio of lithium nickelates: olivine compound between about 0.05 and about 0.9: between about 0.05 and 0.9. In one example, the lithium nickelates include a lithium nickelate represented by Liₓ₄A^{*}ₓ₅Ni_{(1-y4-z4)}Co_{y4}Q_{z4}Oₐ. In another example, the lithium nickelates includes a lithium nickelate represented by Liₓ₃Ni_{(1-z3)}M'_{z3}O₂. Alternatively, the lithium nickelates includes a lithium nickelate including at least one modifier of both the Li and Ni atoms, such as Liₓ₄A^{*}ₓ₅Ni_{(1-y4-z4)}Co_{y4}Q_{z4}Oₐ where x5, y4 and z4 are each independently greater than 0.0 and equal to or less than about 0.2. In a specific example, the lithium nickelate is represented by an empirical formula of Liₓ₄A^{*}ₓ₅Ni_{(1-y4-z4)}Co_{y4}Q_{z4}Oₐ where x5, y4 and z4 are each independently greater than 0.0 and equal to or less than about 0.2. In one specific example, the olivine compound is represented by Li₍₁₋ₓ₂₎A"ₓ₂MPO₄ where M is iron or manganese, such as LiFePO₄ and LiMnPO₄, and the lithium nickelates include Li(Ni_{1/3}Co_{1/3}Mn_{1/3})O₂ and a lithium nickelate including at least one modifier of both the Li and Ni atoms, such as Liₓ₄A^{*}ₓ₅Ni_{(1-y4-z4)}Co_{y4}Q_{z4}Oₐ where x5, y4 and z4 are each independently greater than 0.0 and equal to or less than about 0.2. In this example, the lithium nickelates and olivine compound are preferably in a ratio of Li(Ni_{1/3}Co_{1/3}Mn_{1/3})O_{2:} lithium nickelate: olivine compound between about 0.05 and about 0.8: between about 0.05 and about 0.7: between about 0.05 and about 0.9.

In a twelfth embodiment, an active cathode material of the invention includes a lithium nickelate, a lithium cobaltate, such as LiCoO₂, and an olivine compound represented by Li₍₁₋ₓ₂₎A"ₓ₂MPO₄ described above. The lithium nickelate, lithium cobaltate and olivine compound, including specific examples thereof, are as described above. In this embodiment, the lithium nickelate, lithium cobaltate and olivine compound are preferably in a ratio of lithium cobaltate: olivine compound: lithium nickelate between about 0.05 and about 0.8: between about 0.05 and about 0.7: between about 0.05 and about 0.9. In one example, the lithium nickelates include a lithium nickelate represented by Liₓ₄A^{*}ₓ₅Ni_{(1-y4-z4)}Co_{y4}Q_{z4}Oₐ. In another example, the lithium nickelates includes a lithium nickelate represented by Liₓ₃Ni_{(1-z3)}M'_{z3}O₂. Alternatively, the lithium nickelates includes a lithium nickelate including at least one modifier of both the Li and Ni atoms, such as Liₓ₄A^{*}ₓ₅Ni_{(1-y4-z4)}Co_{y4}Q_{z4}Oₐ where x5, y4 and z4 are each independently greater than 0.0 and equal to or less than about 0.2. In one specific example, the lithium nickelate is represented by Liₓ₄A^{*}ₓ₅Ni_{(1-y4-z4)}Co_{y4}Q_{z4}Oₐ, preferably Liₓ₄A^{*}ₓ₅Ni_{(1-y4-z4)}Co_{y4}Q_{z4}Oₐ where x5, y4 and z4 are each independently greater than 0.0 and equal to or less than about 0.2, and the olivine compound is represented by Li₍₁₋ₓ₂₎A"ₓ₂MPO₄ where M is iron or manganese. In this specific example, the lithium nickelate, lithium cobaltate and olivine compound are preferably in a ratio of lithium cobaltate: olivine compound: lithium nickelate between about 0.05 and about 0.30: between about 0.05 and about 0.30: between about 0.4 and about 0.9. In a second specific example, the lithium nickelate is Li(Ni_{1/3}Co_{1/3}Mn_{1/3})O₂, and the olivine compound is represented by Li₍₁₋ₓ₂₎A"ₓ₂MPO₄ where M is iron or manganese. In the second specific example, preferably the lithium nickelate, lithium cobaltate and olivine compound are in a ratio of lithium nickelate: olivine: lithium cobaltate between about 0.05-0.8: about 0.3-0.7: about 0.05-0.8. In a third specific example, the lithium nickelate is LiNi_{0.8}Co_{0.15}Al_{0.05}O₂, preferably LiCoO₂-coated LiNi_{0.8}Co_{0.15}Al_{0.05}O₂, and the olivine compound is represented by Li₍₁₋ₓ₂₎A"ₓ₂MPO₄ where M is iron or manganese.

In a thirteenth embodiment, an active cathode material of the invention includes a manganate spinel, an olivine compound, preferably an olivine compound represented by Li₍₁₋ₓ₂₎A"ₓ₂MPO₄ where M is iron or manganese, and a lithium nickelate. The manganate spinel, olivine compound and lithium nickelate, including specific examples thereof, are as described above. In this embodiment, manganate spinel, olivine compound and lithium nickelate are preferably in a ratio of manganate spinel: olivine: lithium nickelate between about 0.05-0.9: about 0.05-0.9: about 0.05-0.9. In one example, the manganate spinel is represented by Li₍₁₊ₓ₁₎(Mn_{1-y1}A'_{y1})₂₋ₓ₁O_{z1}. In another example, the manganate spinel is represented by Li₁₊ₓ₇Mn₂₋ₓ₇O₄, preferably LiMn₂O₄. In one specific example, the manganate spinel is represented by Li₍₁₊ₓ₁₎(Mn_{1-y1}A'_{y1})₂₋ₓ₁O_{z1} and the lithium nickelate includes at least one modifier of both the Li and Ni atoms, such as a lithium nickelate represented by Liₓ₄A^{*}ₓ₅Ni_{(1-y4-z4)}Co_{y4}Q_{z4}Oₐ where x5, y4 and z4 are each independently greater than 0.0 and equal to or less than about 0.2. In a second specific example, the manganate spinel is represented by Li₍₁₊ₓ₁₎(Mn_{1-y1}A'_{y1})₂₋ₓ₁O_{z1} and the lithium nickelate is represented by Liₓ₃Ni_{(1-z3)}M'_{z3}O₂, preferably LiNi_{0.8}Co_{0.15}Al_{0.05}O₂, more preferably LiCoO₂-coated LiNi_{0.8}Co_{0.15}Al_{0.05}O₂. In a third specific example, the manganate spinel is represented by Li₍₁₊ₓ₁₎(Mn_{1-y1}A'_{y1})_{2-x1Oz1} and the lithium nickelate is Li(Ni_{1/3}Co_{1/3}Mn_{1/3})O₂. In a fourth specific example, the managanate is represented by Li₁₊ₓ₇Mn₂₋ₓ₇O₄, preferably Li₁₊ₓMn₂₋ₓO₄ and its variations modified with Al and Mg, and the lithium nickelate is selected from the group consisting of Li(Ni_{1/3}Co_{1/3}Mn_{1/3})O₂, and LiCoO₂-coated LiNi_{0.8}Co_{0.15}Al_{0.05}O₂.

In a fourteenth embodiment, an active cathode material of the invention includes two or more lithium nickelates as described above. In one example, the active cathode material includes Li(Ni_{1/3}Co_{1/3}Mn_{1/3})O₂. In a specific example, the active cathode material includes Li(Ni_{1/3}Co_{1/3}Mn_{1/3})O₂ and a lithium nickelate including at least one modifier of both the Li and Ni atoms, such as a lithium nickelate represented by Liₓ₄A^{*}ₓ₅Ni_{(1-y4-z4)}Co_{y4}Q_{z4}Oₐ where x5, y4 and z4 are each independently greater than 0.0 and equal to or less than about 0.2. Preferably, in this example, the lithium nickelates are in a ratio of Li(Ni_{1/3}Co_{1/3}Mn_{1/3})O₂: Liₓ₄A^{*}ₓ₅Ni_{(1-y4-z4)}Co_{y4}Q_{z4}Oₐ between about 0.7:0.3 to about 0.3:0.7. In another specific example, the active cathode material includes Li(Ni_{1/3}Co_{1/3}Mn_{1/3})O₂ and LiNi_{0.8}Co_{0.15}Al_{0.05}O₂, more preferably LiCoO₂-coated LiNi_{0.8}Co_{0.15}Al_{0.05}O₂. Preferably, in this example, the lithium nickelates are in a ratio of Li(Ni_{1/3}Co_{1/3}Mn_{1/3})O₂: LiNi_{0.8}Co_{0.15}Al_{0.05}O₂ between about 0.8:0.2 to about 0.2:0.8.

Another aspect of the present invention is directed to a lithium-ion battery that employs the active cathode materials of the invention described above. Preferably, the battery has a greater than about 2.2 Ah/cell capacity. More preferably, the battery has a greater than about 3.0 Ah/cell capacity, such as equal to or greater than about 3.3 Ah/cell; equal to or greater than about 3.5 Ah/cell; equal to or greater than about 3.8 Ah/cell; equal to or greater than about 4.0 Ah/cell; equal to or greater than about 4.2 Ah/cell; between about 3.0 Ah/cell and about 6 Ah/cell; between about 3.3 Ah/cell and about 6 Ah/cell; between about 3.3 Ah/cell and about 5 Ah/cell; between about 3.5 Ah/cell and about 5 Ah/cell; between about 3.8 Ah/cell and about 5 Ah/cell; and between about 4.0 Ah/cell and about 5 Ah/cell.

In one embodiment, the batteries of the invention include an active cathode material including a mixture that includes: at least one of a lithium cobaltate and a lithium nickelate; and at least one of a manganate spinel represented by an empirical formula of Li₍₁₊ₓ₁₎(Mn_{1-y1}A'_{y1})₂₋ₓ₁O_{z1} described above and an olivine compound represented by an empirical formula of Li₍₁₋ₓ₂₎A"ₓ₂MPO₄ described above. In another embodiment, the batteries of the invention include an active cathode material including a mixture that includes: at least one of a lithium cobaltate and a lithium nickelate selected from the group consisting of LiCoO₂-coated LiNi_{0.8}Co_{0.15}Al_{0.05}O₂, and Li(Ni_{1/3}Co_{1/3}Mn_{1/3})O₂; and a manganate spinel having an empirical formula of Li₍₁₊ₓ₇₎Mn_{2-y7}O_{z7} described above. In yet another embodiment, the batteries of the invention include an active cathode material including a mixture that includes: a lithium nickelate selected from the group consisting of LiCOO₂-coated LiNi_{0.8}Co_{0.15}Al_{0.05}O₂, and Li(Ni_{1/3}Co_{1/3}Mn_{1/3})O₂; and a manganate spinel having an empirical formula of Li₍₁₊ₓ₇)Mn_{2-y7}O_{z7} described above. The batteries each independently have a capacity as described above, preferably greater than about 3.0 Ah/cell.

In a preferred embodiment, cell building for the batteries of the invention utilize a larger format in terms of Ah/cell than is currently used in the industry such as in the case for 18650 cells.

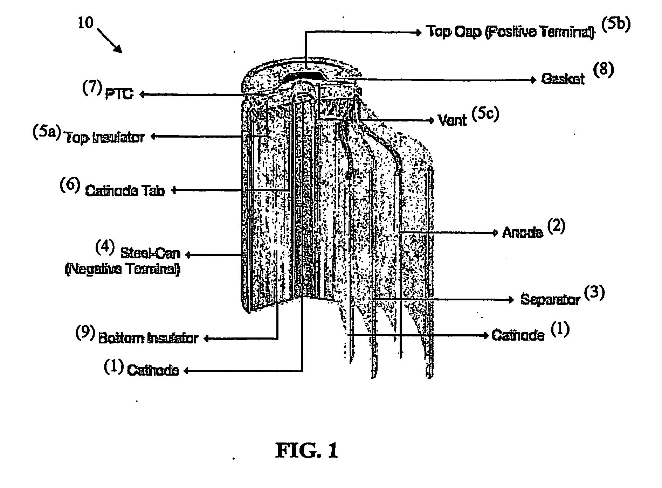

FIG. 1 shows a cylindrical shape lithium-ion battery (10), which includes a positive electrode (1), coated onto an aluminum foil, a negative electrode (2), coated onto a copper foil, a separator positioned between the positive and negative electrodes (3), a can containing the wound components (4), an electrically insulated (5a) (from can) top that is crimped onto the can (5b) (top may contain a current-interrupt-device CID, and a vent (5c)), nickel lead that is electrically connecting the anode with the top, and an aluminum lead that is electrically connecting the cathode with the can (6). A PTC switch (7) can be located inside or outside the can. Insulators are also located at the top (8) and the bottom (9) of the can that keep foils from touching each other and insulates foil ends from can.

The negative active material (anode) can include any material allowing lithium to be inserted in or removed from the material. Examples of such materials include carbonaceous materials, for example, non-graphitic carbon, artificial carbon, natural graphite, pyrolytic carbons, cokes such as pitch coke, needle coke, petroleum coke, graphite, vitreous carbons, or a heat treated organic polymer compound obtained by carbonizing phenol resins, furan resins, or similar, carbon fibers, and activated carbon. Further, metallic lithium, lithium alloys, and an alloy or compound thereof are usable as the negative active materials. In particular, the metal element or semiconductor element allowed to form an alloy or compound with lithium may be a group IV metal element or semiconductor element, such as but not limited to, silicon or tin. In particular amorphous tin, that is doped with a transition metal, such as cobalt or iron/nickel, is a metal that has high promise for anode material in these type batteries. Oxides allowing lithium to be inserted in or removed from the oxide at a relatively low potential, such as iron oxide, ruthenium oxide, molybdenum oxide, tungsten oxide, titanium oxide, and tin oxide, and nitrides can be similarly usable as the negative active materials.

The positive electrode of the batteries or cells of the invention include the active cathode materials of the invention described above. In particular, the batteries of the invention employ the active cathode materials including two or more advantages of: high specific capacity of the lithium nickelates (e.g., Li(Ni_{1/3}Co_{1/3}Mn_{1/3})O₂ or LiNi_{0.8}Co_{0.15}Al_{0.05}O₂) or lithium cobaltates (e.g., LiCoO₂); relatively high safety of the olivine compounds (e.g., LiFePO₄) or manganate spinels (e.g., LiMn₂O₄). When the active cathode materials of the invention are used in a positive electrode structure for use in the lithium batteries of the invention, the resulting batteries are sufficiently safe and have high capacity in terms of Wh/kg and/or Wh/L. The cells of the invention typically have a form factor that is larger, both in terms of absolute volume and Ah/cell, compared to currently available 18650 cells (*i*.*e.*,183665 form factor) . The increased cell size and capacity are made possible at least partly by the relatively higher safety of the mixed cathode. The cells of the invention for lithium batteries can have safer properties than corresponding cells utilizing solely LiCoO₂ as the cathode material, although the cells have similar or higher capacities.

Since each one of the cathode components in the mixture has unique chemistry it is particularly important to have an electrolyte that has additives suitable for SEI formation of each chemical. For instance, a suitable electrolyte for batteries having cathodes containing manganate spinel and lithium cobaltate and anodes containing graphite may contain additives of LiBOB, PS, and VC, which are suitable for these types of compounds.

Examples of the non-aqueous electrolytes include a non-aqueous electrolytic solution prepared by dissolving an electrolyte salt in a non-aqueous solvent, a solid electrolyte (inorganic electrolyte or polymer electrolyte containing an electrolyte salt), and a solid or gel-like electrolyte prepared by mixing or dissolving an electrolyte in a polymer compound or the like.

The non-aqueous electrolytic solution is prepared by dissolving a salt in an organic solvent. The organic solvent can include any suitable type that has been generally used for batteries of this type. Examples of such organic solvents include propylene carbonate, ethylene carbonate, diethyl carbonate, dimethyl carbonate, 1,2-dimethoxyethane, 1,2-diethoxyethane, γ-butyrolactone, tetrahydrofuran, 2-methyl tetrahydrofuran, 1,3-dioxolane, 4-methyl-1,3-dioxolane, diethyl ether, sulfolane, methylsulfolane, acetonitrile, propionitrile, anisole, acetate, butyrate, propionate and the like. It is preferred to use cyclic carbonates such as propylene carbonate, or chain carbonates such as dimethyl carbonate and diethyl carbonate. These organic solvents can be used singly or in a combination of two types or more.

Additives or stabilizers may also be present in the electrolyte, such as VC (vinyl carbonate), VEC (vinyl ethylene carbonate), EA (ethylene acetate), TPP (triphenylphosphate), phosphazenes, LiBOB, LiBETI, LiTFSI, BP (biphenyl), PS (propylene sulfite), ES (ethylene sulfite), AMC (allylmethylcarbonate), and APV (divinyladipate). These additives are used as anode and cathode stabilizers or flame retardants, which may make a battery have higher performance in terms of formation, cycle efficiency, safety and life. Since each one of the cathode components in the mixture has unique chemistries it is particularly important to have an electrolyte that has additives suitable for SEI formation of each chemical. For instance a suitable electrolyte for a Li-ion battery having a spinel and cobaltate mixed cathode and a graphite anode may contain additives of LiBOB, PS and VC stabilizers, which respectively are suitable for the individual compounds' SEI formations.

The solid electrolyte can include an inorganic electrolyte, a polymer electrolyte and the like insofar as the material has lithium-ion conductivity. The inorganic electrolyte can include, for example, lithium nitride, lithium iodide and the like. The polymer electrolyte is composed of an electrolyte salt and a polymer compound in which the electrolyte salt is dissolved. Examples of the polymer compounds used for the polymer electrolyte include ether-based polymers such as polyethylene oxide and cross-linked polyethylene oxide, polymethacrylate ester-based polymers, acrylate-based polymers and the like. These polymers may be used singly, or in the form of a mixture or a copolymer of two kinds or more.

A matrix of the gel electrolyte may be any polymer insofar as the polymer is gelated by absorbing the above-described non-aqueous electrolytic solution. Examples of the polymers used for the gel electrolyte include fluorocarbon polymers such as polyvinylidene fluoride (PVDF), polyvinylidene-co-hexafluoropropylene (PVDF-HFP) and the like.

Examples of the polymers used for the gel electrolyte also include polyacrylonitrile and a copolymer of polyacrylonitrile. Examples of monomers (vinyl based monomers) used for copolymerization include vinyl acetate, methyl methacrylate, butyl methacylate, methyl acrylate, butyl acrylate, itaconic acid, hydrogenated methyl acrylate, hydrogenated ethyl acrylate, acrlyamide, vinyl chloride, vinylidene fluoride, and vinylidene chloride. Examples of the polymers used for the gel electrolyte further include acrylonitrile-butadiene copolymer rubber, acrylonitrile-butadiene- -styrene copolymer resin, acrylonitrile-chlorinated polyethylene-propylenediene-styrene copolymer resin, acrylonitrile-vinyl chloride copolymer resin, acrylonitrile-methacylate resin, and acrlylonitrile-acrylate copolymer resin.

Examples of the polymers used for the gel electrolyte include ether based polymers such as polyethylene oxide, copolymer of polyethylene oxide, and cross-linked polyethylene oxide. Examples of monomers used for copolymerization include polypropylene oxide, methyl methacrylate, butyl methacylate, methyl acrylate, butyl acrylate.

In particular, from the viewpoint of oxidation-reduction stability, a fluorocarbon polymer is preferably used for the matrix of the gel electrolyte.

The electrolyte salt used in the electrolyte may be any electrolyte salt suitable for batteries of this type. Examples of the electrolyte salts include LiClO₄, LiAsF₆, LiPF₆, LiBF₄, LiB(C₆R₅)₄, LiB(C₂O₄)₂, CH₃SO₃Li, CF₃SO₃Li, LiCl, LiBr and the like.

Referring back to FIG. 1, in one embodiment of the invention, the separator 3 separates the positive electrode 1 from the negative electrode 2. The separator 3 can include any film-like material having been generally used for forming separators of non-aqueous electrolyte secondary batteries of this type, for example, a microporous polymer film made from polypropylene, polyethylene, or a layered combination of the two. In addition, if a solid electrolyte or gel electrolyte is used as the electrolyte of the battery 10, the separator 3 does not necessarily need to be provided. A microporous separator made of glass fiber or cellulose material can in certain cases also be used. Separator thickness is typically between 9 and 25 µm.

Positive electrode 2 is typically produced by mixing the cathode material at about 94 wt % together with about 3 wt % of a conductive agent (e.g. acetylene black), and about 3 wt % of a binder (e.g., PVDF). The mix is dispersed in a solvent (e.g., N-methyl-2-pyrrolidone (NMP)), in order to prepare a slurry. This slurry is then applied to both surfaces of an aluminum current collector foil, which typically has a thickness of about 20 um, and dried at about 100-150 °C. The dried electrode is then calendared by a roll press, to obtain a compressed positive electrode.

The negative electrode is typically prepared by mixing about 93 wt% of graphite as a negative active material, about 3 wt% of conductive carbon (e.g. acetylene black), and about 4 wt% of a binder (e.g. PVDF). The negative electrode is then prepared from this mix in a process similar to that described above for positive electrode except that a copper current collector foil, typically of 10-15 µm thickness, is used.

The negative and positive electrodes and a separator formed of a polymer film (e.g., polyethylene) with micro pores, of thickness about 25 um, are laminated and spirally wound to produce a spiral type electrode element Preferably this roll has an oblong shape.

One or more positive lead current carrying tabs are attached to the positive current collector and then welded to the battery top. A vent is also available, for example, at the top of the battery. A negative lead, made of nickel metal, connects the negative current collector to the bottom of the battery can.

An electrolyte containing for instance PC, EC, DMC, DEC solvents with 1M LiPF₆ and suitable additives at 0.5 - 3 wt.% each, such as VC, LiBOB, PF, LiTFSI, BP, is vacuum filled in the battery can 4 having the spirally wound "jelly roll", and the battery is then sealed via an insulating seal gasket 8. A safety valve 5c, current interrupt device, and a PTC device may also be present at the battery top to enhance safety. A cylindrical non-aqueous electrolyte lithium-ion secondary battery having an outer diameter of 18 mm, and a height of 65 mm as shown in FIG. 1 is typical of lithium-ion cells used in the industry.

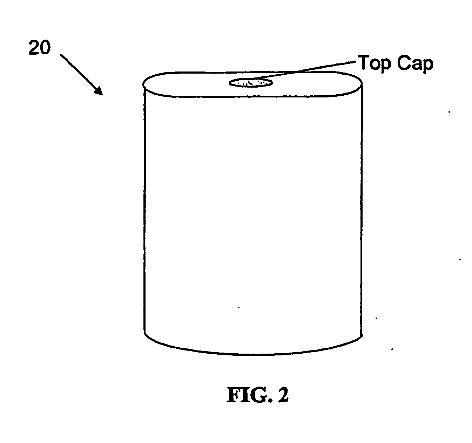

For a cell having an oblong shape as shown in FIG. 2, a similar method as described above for a cylindrical cell of the invention can be used except that the electrodes are prepared and wound to form a cell having an oblong shape, for example, with a thickness of 17 or 18 mm, a width of 44 or 36 mm, a height of 65 mm.

The cells or batteries of the invention can be cylindrical or prismatic (stacked or wound), preferably prismatic, and more preferably of a prismatic shape that is oblong. Although the present invention can use all types of prismatic cans, an oblong can is preferred partly due to the two features described below.

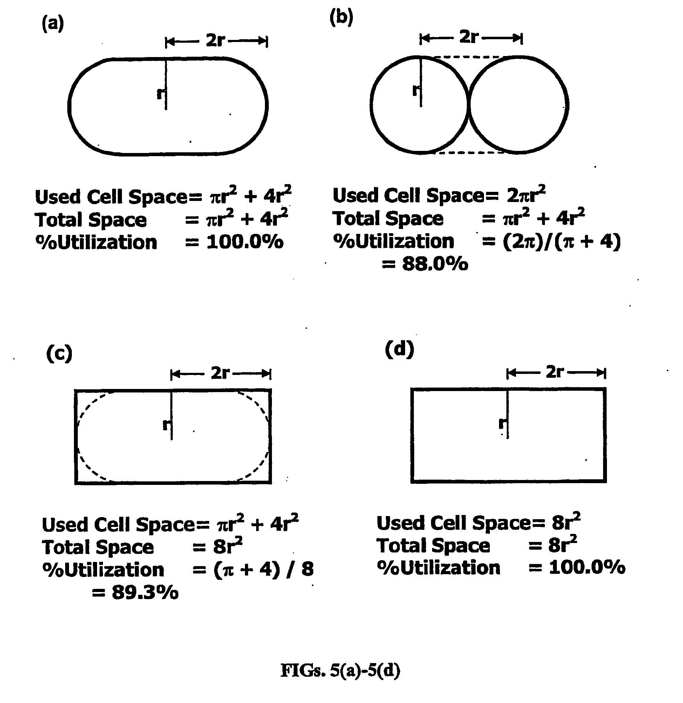

As shown in FIGs. 5(a)-5(d), the available internal volume of an oblong shape, such as the 183665 form factor, is larger than the volume of two 18650 cells, when comparing stacks of the same external volume. In particular, FIGs. 5(a)-(b) show a comparison of an oblong cross section (FIG. 5(a)) to a cylindrical cross section for two 18650 cells (FIG. 5(b)). The additional useable space is 12%. When assembled into a battery pack, the oblong cell fully utilizes more of the space that is occupied by the battery pack. This enables novel design changes to the internal cell components that can increase key performance features without sacrificing cell capacity relative to that found in the industry today. Design features such as mixing in components of higher safety, but relatively lower capacity, while still realizing high capacity on the pack level is therefore available. In addition, again due to the larger available volume, one can elect to use thinner electrodes which have relatively higher cycle life. The thinner electrodes also have higher rate capability. Furthermore an oblong (or prismatic) can has larger flexibility. For instance, an oblong shape can flex more at the waist point compared to a cylindrically shaped can, which allows less flexibility as stack pressure is increasing upon charging. The increased flexibility decreases mechanical fatigue on the electrodes, which in turn causes higher cycle life. Also, separator pore clogging is improved by the relatively lower stack pressure.

A particularly desired feature, allowing relatively higher safety, is available for the oblong shaped can compared to the prismatic can whose cross-section is illustrated in FIG. 5(c). The oblong shape provides a snug fit to the jelly roll, which minimizes the amount of electrolyte necessary for the battery. The relatively lower amount of electrolyte results in less available reactive material during a misuse scenario and hence higher safety. In addition, cost is lower due to a lower amount of electrolyte. In the case of a prismatic can with a stacked electrode structure, whose cross-section is illustrated in FIG. 5(d), full volume utilization is possible without unnecessary electrolyte, but this type of can design is more difficult and hence more costly from a manufacturing point-of-view.

In another aspect, the present invention is directed to a battery pack including one or more cells as described above for the lithium-ion batteries of the invention.

In a preferred embodiment, the battery pack includes a plurality of cells and each of the cells includes an active cathode material described above. Cells of a battery packs of the invention are connected with each other in series or parallel, or in series and in parallel (e.g., packs having 2 cells in parallel and 3 cells in series, a so-called 2p3s configuration). In a specific embodiment, each cell of the battery pack of the invention includes an active cathode material including a mixture that includes: at least one of a lithium cobaltate and a lithium nickelate; and at least one of a manganate spinel represented by an empirical formula of Li₍₁₊ₓ₁₎(Mn_{1-y1}A'_{y1})₂₋ₓ₁O_{z1} described above and an olivine compound represented by an empirical formula of Li₍₁₋ₓ₂₎A"ₓ₂MPO₄ described above. In another specific embodiment, each cell of the battery pack includes an active cathode material including a mixture that includes: at least one of a lithium cobaltate and a lithium nickelate selected from the group consisting of LiCoO₂-coated LiNi_{0.8}Co_{0.15}Al_{0.05}O₂, and Li(Ni_{1/3}Co_{1/3}Mn_{1/3})O₂; and a manganate spinel having an empirical formula of Li₍₁₊ₓ₇₎Mn_{2-y7}O_{z7} described above. At least one cell of the battery pack has a capacity greater than about 3.0 Ah/cell. In yet another specific embodiment, each cell of the battery pack includes an active cathode material including a mixture that includes: a lithium nickelate selected from the group consisting of LiCoO₂-coated LiNi_{0.8}Co_{0.15}Al_{0.05}O₂, and Li(Ni_{1/3}Co_{1/3}Mn_{1/3})O₂; and a manganate spinel having an empirical formula of Li₍₁₊ₓ₇₎Mn_{2-y7}O_{z7} described above. Preferably, at least one cell of the cells included in the battery pack has a capacity greater than about 3.0 Ah/cell.

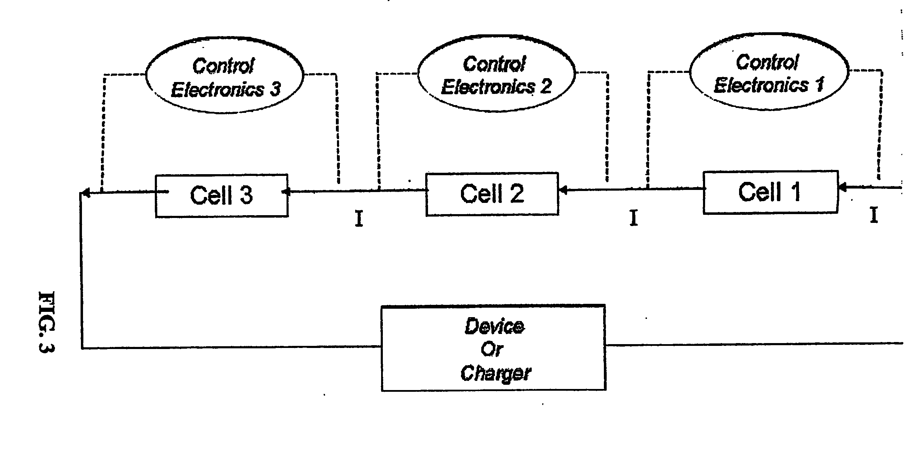

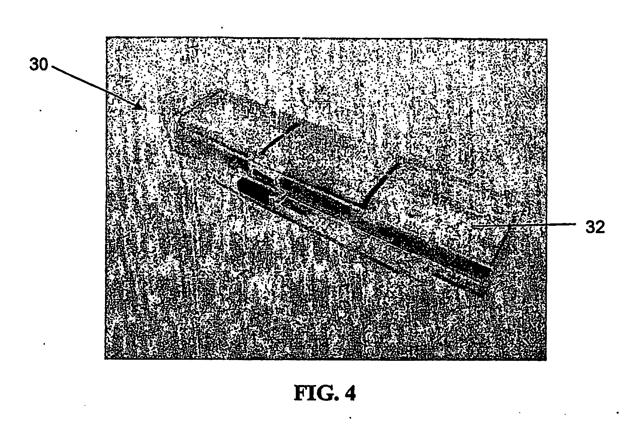

In a more preferred embodiment, the battery pack includes a plurality of cells, and the cells of a battery pack of the invention are connected only in series and no cells are connected in parallel. Such a configuration is demonstrated schematically in FIG. 3 and FIG. 4. The non-parallel feature of the pack allows less expensive individual control and monitoring of each cell in the pack, without having to incorporate extra circuitry for detection of individual cell parameters for cells connected in parallel, which is costly and cumbersome due to incorporation of extra algorithms in software and probe terminals.

FIG. 3 shows one embodiment of the invention showing three cells of the invention connected in series. These cells, due to their safer performance characteristics, can be made larger compared to cells employing LiCoO₂ as the choice of cathode active material. This allows connecting cells into packs, having fewer cells connected in parallel.

FIG. 4 shows a top, see-through view of battery pack 30 of the invention where three cells 32 of the invention are connected in series with each other.

In one specific embodiment, the battery packs of the invention have a 2p3 s configuration where cells are assembled in packs having 2 cells in parallel and 3 cells in series, as can be seen in the conventional 18650 type cells typically used for laptop markets currently. In other embodiments, the battery packs of the invention have 3s or 4s configurations, taking advantage of the larger cell capacity enabled by the invention to simplify, and therefore lower cost and improve safety, the resulting battery pack.

Preferably, the cells included in the battery pack have oblong-shaped can 20 as shown generally in FIG. 2. The preference for this shape is illustrated in FIG. 5 and includes full volume utilization, no unnecessary electrolyte inside the cell can, and relative ease of manufacturing. The capacity of the cells in the battery pack is typically equal to or greater than about 3.3 Ah. The internal impedance of the cells is preferably less than about 50 milliohms, more preferably less than 30 milliohms.

A new battery design of the invention described above can use a larger cell sizes and can potentially replace two parallel 18650 cells (2p block). An advantage of using this configuration is that control electronics can monitor only one cell in the block instead of two, which is the case for a 2p block of 18650 cells. This type of monitoring can allow detection of defects, such as shorts, in the cells, errors that may not be detected for a block having one defect and one non-defect cell. In addition, cost advantages can be realized by using relatively less battery components such as PTC and CID devices and electronic wiring, which connects cells in parallel and to control circuitry, per battery pack.

In order to raise capacity in 18650 cells, companies such as Sony, Sanyo, MBI (Panasonic), LG, and Samsung have been gradually increasing the packing level of active material (graphite and cobaltate) in the cell since their implementation in the early 90's. The higher degree of packing has in part been accomplished by increasing electrode dimensions in terms of electrode width, increased densification of electrodes, increased thickness of the electrodes, less tolerance on the overcapacity of the anode capacity/cathode capacity ratio, and a tighter fit of the jelly roll in the battery steel can. However, one drawback of these approaches has been less safety as seen by an increased level of safety incidents in the field lately. Another drawback is a decreased cycle life. Also, a typical 18650 cell can is made by steel. As capacity of this type cell has increased, so has the density and thickness of electrodes, along with the degree of packing of the jelly roll in the can. The graphite and metal oxide particulates in the anode and cathode electrodes of the 18650 cell continuously change their dimensions as lithium is intercalated and de-intercalated upon charging and discharging. Many metal oxide materials increase their size, due to increase in lattice parameters, when lithium is removed from the structure. LiCoO₂ and LiNiO₂ are two examples of cathode materials that increase their c-axis when lithium is gradually removed from the structure. Similarly, when lithium is inserted into graphite the c-axis lattice parameter is increased. This means that upon charging, a battery containing LiCoO₂- and graphite-based electrodes, both the anode and the cathode electrodes increase their thickness. This generally leads to an increased stack pressure in the cell, as the steel can limit expansion. Two typical types of degradation in the cylindrical, conventional LiCoO₂-based lithium cells are believed to be: (1) increased stack pressure imposed by the sturdy cylindrical steel can causes electrodes to clog the separator pores, and (2) mechanical fatigue of relatively thick electrodes causes the electrodes to degrade earlier due to poor connectivity leading to decreased electronic conductivity.

On the other hand, the invention described herein realizes that combinations of electrode materials for the cathode having two or more active material components, one having high capacity, the other having a relatively higher safety, can allow for lithium-ion batteries of high safety while at the same time achieving high capacity in battery packs employing those cells, in particular oblong-shaped cells. In addition, not only are the cells safe enough and of high enough capacity for commercialization objectives, but they also exhibit significantly high cycle life. For example, oblong-shaped cells having an external dimension of about 64 mm in height, about 36 mm in width and about 18 mm in thickness (see Example 4) showed higher voltage, better cycle life and better rate capability than commercially available 18650 cells from LG and SANYO (see Example 6). Lager cells having superior cycle life, high safety, and high capacity can also be made by utilizing the present invention. Even for powercells, it is believed that the present invention can replace power cells of 18650-type or 26mm diameter in the art. Also HEV-type batteries can benefit from the present invention.

In yet another aspect, the present invention also includes a system that includes a portable electronic device and a cell or battery (e.g., lithium-ion battery), and battery pack as described above. Examples of the portable electronic devices include portable computers, power tools, toys, portable phones, camcorders, PDAs and hybrid-electric vehicles. In one embodiment, the system includes a battery pack of the invention. Features of the battery pack are as described above.

The invention is illustrated by the following examples which are not intended to be limiting in any way.

### EXEMPLIFICATION

### Example 1-3 and a Comparative Example

Using known active cathode material performance properties that include discharge capacity, average discharge voltage, first discharge vs. first charge efficiency, and material density, performance features can be compared for batteries resulting from mixtures of cathode materials. For a lithium-ion battery as described above, a cathode is used that consists of a mixture of active cathode materials that includes lithium cobaltate (x%), manganate spinel (y%), and lithium nickelate (z%). The manganate spinel and lithium nickelate cathode materials are of the preferred type mentioned in the descriptive text above. Performance features for these cathode materials are representative of individual cathode materials in their representative class and for capacity, average discharge voltage, first cycle efficiency, and density are: lithium cobaltate - 145 mAh/g, 3.70 V, 96.0%, 4.9 g/cm³; manganate spinel - 115 mAh/g, 3.80 V, 94.0%, 4.1 g/cm³; lithium nickelate - 180 mAh/g, 3.50 V, 92.0%, 4.6 g/cm³. For the case when x = 40, y = 60, and z = 0, the resulting active cathode material of this example has the properties of 127 mAh/g, 3.75 V, 94.8%, and 4.4 g/cm³.

Designing a fixed capacity 5 Ah lithium-ion cell and allowing the weight of the battery to vary in order that the capacity requirement is achieved, allows calculation of key battery performance and cost features for comparison under different cathode scenarios. Additional key parameters that must be fixed in the battery design include cell cross-sectional area (4.4 x 6.4 cm), cell thickness (1.85 cm), cathode coating area (2079 cm²), cathode electrode area (2 x 1099 cm²), anode coating area (2181 cm²), anode electrode area (2 x 1127 cm²), separator area (2416 cm²), A1 case thickness (500 µm) and density (3.70 g/cm³), coated cathode formulation (94% active material, 3% conductive carbon, 3% binder), cathode conductive carbon material density (1.50 g/cm³), cathode binder material density (1.80 g/cm³), cathode porosity (20%), cathode A1 foil thickness (15 µm) and density (2.70 g/cm³), coated anode formulation (93% active material, 2% conductive carbon, 5% binder), anode active material capacity (330 mAh/g) and density (2.20 g/cm³), anode first discharge vs. first charge efficiency (93%), anode conductive carbon material density (1.50 g/cm³), anode binder material density (1.80 g/cm³), anode porosity (30%), Cu anode foil thickness (12 µm) and density (8.90 g/cm³), anode/cathode capacity ratio (1.1), separator thickness (25 µm) and porosity (45%), electrolyte density (1.20 g/cm³), cell insulator and tab weight (1.00 g), coating solvent identity (NMP) and fraction (60% by volume), and associated material cost parameters.

The lithium-ion battery resulting from use of the cathode material described in this example has properties as shown in Table 2.

**Table 2**

| Cathode Material | Energy Density (Wh/L) | Cost ($/Wh) | Cell Material Cost for Pack of 3 Cells ($) | Advantage vs. LiCoO₂ |
|---|---|---|---|---|
| Example 1 (x=40,y=60,z=0) | 407 | 0.176 | 13.76 | Energy Density, Cost, Safety |
| Example 2 (x=15,y=15,z=70) | 406 | 0.162 | 12.64 | Energy Density, Cost, Safety |
| Example 3 (x=20,y=60,z=20) | 404 | 0.166 | 12.85 | Energy Density, Cost, Safety |
| Comparative Example 1 (x=100) | 401 | 0.208 | 15.97 | |

### Example 4: An oblong cell with high capacity having an active cathode material including LiCoO₂/LiMn₂O₄

94 wt.% mixed cathode with a weight ratio of 70:30 for LiCoO₂:LiMn₂O₄, 3 wt.% of carbon black and 3 wt.% of PVDF were mixed in NMP under stirring. The electrode slurry was coated onto a 15 micrometer thick A1 current collector. The A1 current collector had a dimension of width of 56 mm and length of 1568 mm. The slurry was coated on both sides of the A1 current collector. The coating length was 1510 and 1430 mm for side 1 and side 2. The process media NMP was removed by heating the coated electrode at 150 °C for a few minutes. The electrode was pressed to control the coated density. The 2-side coating was identical in every aspect. The thickness of the total electrode was 140 micrometers. The composite cathode density was 3.6 g/cc. Two A1 tabs with about a width of 3 mm, length of 55 mm and thickness of 0.2 mm were welded onto the uncoated A1 current collector.

93 wt.% of graphite, 2 wt.% of carbon black and 5 wt.% of PVDF binder were mixed in NMP under stirring. The electrode slurry was coated onto a 12 micrometer thick Cu current collector. The Cu current collector had a dimension of width of 57.5 mm and length of 1575 mm. The slurry was coated on both sides of the Cu current collector. The coating length was 1495 and 1465 mm for side 1 and side 2 respectively. The process media NMP was removed by heating the coated electrode at 150 °C for a few minutes. The electrode was pressed to control the coated density. The 2-side coating was identical in every aspect. The thickness of the total electrode was 130 micrometers. The composite anode density was 1.8g/cc. Two Ni tabs with about a width of 3 mm, length of 55 mm and thickness of 0.2 mm was welded onto the uncoated Cu current collector.

The cathode and anode were separated by a microporous separator, with a thickness of 25 micrometers, width of 60 mm and length of 310 cm. They were wounded into a jelly-roll. The jelly-roll was pressed into a prismatic format

The pressed jelly-roll was inserted into a prismatic A1 case, with A1 thickness of 0.4 mm. The case had an external dimension of about 64 mm in height, 36 mm in width and 18 mm in thickness. The positive tab was welded on to the top A1 cap, and the negative tab was welded onto a connection passing through the A1 case. An A1 cap was welded onto the A1 case. Approximately 10 g 1M LiPF₆ EC/PC/EMC/DMC electrolyte solution was added into the cell under vacuum. After formation, the cell was completely sealed.

This cell had a capacity of 4.4 Ah at C/5 discharge rate. The nominal voltage was 3.7 V. The total cell weight was approximately 89 g. The cell energy density was approximately 183 Wh/kg and 440 Wh/liter.

### Example 5A (Prophetic Example): A cell with an active cathode material including LiCoO₂/LiMn_{1.9}Al_{0.1}O₄

In this example, a prismatic cell with an active cathode material including LiCoO₂/LiMn_{1.9}Al_{0.1}O₄ is designed. This cell can be made by a similar procedure as described above in Example 4. For this example, the cathode mix includes 94 wt.% of mixed cathode with a weight ratio of 70:30 for LiCoO₂:LiMn_{1.9}M_{0.1}O₄, 3 wt.% of carbon black and 3 wt.% of PVDF. The electrode slurry is coated onto a 15 micrometer thick A1 current collector. The A1 current collector has a dimension of width of 56 mm and length of 1913 mm. The slurry is coated on both sides of the A1 current collector. The coating length is 1913 and 1799 mm for side 1 and side 2. The process media NMP is removed by heating the coated electrode at 150°C for a few minutes. The electrode is pressed to control the porosity of 25% volume. The 2-side coating is identical in every aspect The thickness of the single coating layer is 50 micrometers. The composite cathode density is 3.36 g/cc. An A1 tab with a width of 5 mm, length of 64 mm and thickness of 0.1 mm is welded onto the uncoated A1 current collector.

93 wt.% of graphite, 2 wt.% of carbon black and 5 wt.% of PVDF binder is mixed in NMP under stirring. The electrode slurry is coated onto a 12 micrometer thick Cu current collector. The Cu current collector has a dimension of width of 58 mm and length of 1940 mm. The slurry is coated on both sides of the Cu current collector. The coating length is 1903 and 1857 mm for side 1 and side 2 respectively, leaving 10 mm Cu uncoated. The process media NMP is removed by heat the coated electrode at 150°C for a few minutes. The electrode is pressed to control the porosity of 37% volume. The 2-side coating is identical in every aspect And the thickness of the single coating layer is 53 micrometers. The calculated composite anode density is 1.35g/cc. A Ni tab with a width of 5 mm, length of 64 mm and thickness of 0.5 mm can be welded onto the uncoated Cu current collector.

The cathode and anode are separated by a microporous separator, with a thickness of 25 micrometers, width of 60 mm and length of 4026 mm. They are then wounded into a jelly-roll. The jelly-roll is pressed into a prismatic format.

The pressed jelly-roll is inserted into a rectangular A1 case, with A1 thickness of 0.5 mm. The case has an external dimension of 64 mm in height, 44 mm in width and 17 mm in thickness. The positive tab is welded on to the top A1 cap, and the negative tab is welded onto the A1 case. An A1 cap is welded onto the A1 case. Approximately 12.3 g 1 M LiPF₆ EC/EMGDMC electrolyte solution is added into the cell under vacuum. After formation, the cell is completely sealed.

This cell has a calculated capacity of 4.5 Ah at C/5 discharge rate. The calculated nominal voltage is 3.7V. The total calculated cell weight is approximately 96 g. The calculated cell energy density is approximately 174 Wh/kg and 350 Wh/L.

### Example 5B (Prophetic Example): A cell with an active cathode material including LiCoO₂/ LiMn_{1.9}Al_{0.1}O₄/LiNi_{0.8}Al_{0.05}Co_{0.15}O₂

In this example, a prismatic cell with an active cathode material including LiCoO₂/LiMn_{1.9}Al_{0.1}O₄/LiNi_{0.8}Al_{0.05}Co_{0.15}O₂ is designed. This cell can be made by a similar procedure as described above in Example 4:
94 wt.% of mixed cathode with a weight ratio of 10:50:40 for LiCoO₂: LiMn_{1.9}Al_{0.1}O₄:LiNi_{0.8}Al_{0.05}Co_{0.15}O₂, 3 wt.% of carbon black and 3 wt.% of PVDF are mixed in NMP under stirring. The electrode slurry is coated onto a 15 micrometer thick A1 current collector. The A1 current collector has a dimension of width of 56 mm and length of 1913 mm. The slurry is coated on both sides of the A1 current collector. The coating length is 1913 and 1799 mm for side 1 and side 2. The process media NMP is removed by heat the coated electrode at 150°C for a few minutes. The electrode is pressed to control the porosity of 25% volume. The 2-side coating is identical in every aspect. And the thickness of the single coating layer is 56 micrometers. The calculated composite cathode density is 3.2 g/cc. An A1 tab with a width of 5 mm, length of 64 mm and thickness of 0.1 mm is welded onto the uncoated A1 current collector.
93 wt.% of graphite, 2 wt.% of carbon black and 5 wt.% of PVDF binder are mixed in NMP under stirring. The electrode slurry is coated onto a 12 micrometer thick Cu current collector. The Cu current collector has a dimension of width of 58 mm and length of 1940 mm. The slurry is coated on both sides of the Cu current collector. The coating length is 1903 and 1857 mm for side 1 and side 2 respectively, leaving 10 mm Cu uncoated. The process media NMP is removed by heat the coated electrode at 150 °C for a few minutes. The electrode is pressed to control the porosity of 37% volume. The 2-side coating is identical in every aspect The thickness of the single coating layer is 60 micrometers. The calculated composite anode density is 1.35g/cc. A Ni tab with a width of 5 mm, length of 64 mm and thickness of 0.5 mm is welded onto the uncoated Cu current collector.

The cathode and anode are separated by a microporous separator, with a thickness of 25 micrometers, width of 60 mm and length of 4026 mm. They are wounded into a jelly-roll. The jelly-roll is then pressed into a prismatic format

The pressed jelly-roll is inserted into a rectangular A1 case, with A1 thickness of 0.5 mm. The case has an external dimension of 64 mm in height, 44 mm in width and 17 mm in thickness. The positive tab is welded on to the top A1 cap, and the negative tab is welded onto the A1 case. An A1 cap is welded onto the A1 case. Approximately 12.3 g 1M LiPF₆ EC/EMC/DMC electrolyte solution is added into the cell under vacuum. After formation, the cell is completely sealed.

This cell has a calculated capacity of 5 Ah at C/5 discharge rate. The calculated nominal voltage is 3.67V. The total calculated cell weight is approximately 101 g. The calculated cell energy density is approximately 181 Wh/kg and 362 Wh/L.

### Example 6. Cell Tests

The cell of Example 4 was cycled (i.e. charged and discharged) as follows:
The cell was charged with a constant current of 0.7C to a voltage of 4.2 V and then was charged using a constant voltage of 4.2 V. The constant voltage charging was ended when the current reached 44 mA. After resting at the open circuit state for 30 minutes, it was discharged with a constant current of C/5. The discharge ended when the cell voltage reached 2.75 V. These procedures were repeated for 3 times.

Then the cell was charged with a constant current of 0.7C to a voltage of 4.2 V and then subsequently was charged using a constant voltage of 4.2 V. The constant voltage charging was ended when the current reached 44 mA. After resting at the open circuit state for 30 minutes, it was discharged with a constant current of 1C. The discharge ended when the cell voltage reached 2.75 V. These procedures repeated continuously to obtain cycle life data.

For rate capability testing, eight cells were charged as described about and discharge was performed to 2.75 V using different current rates ranging in value from C/5 to 2C.

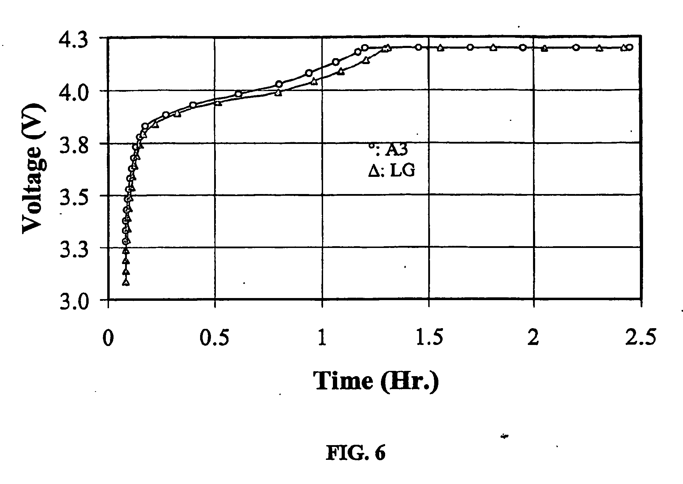

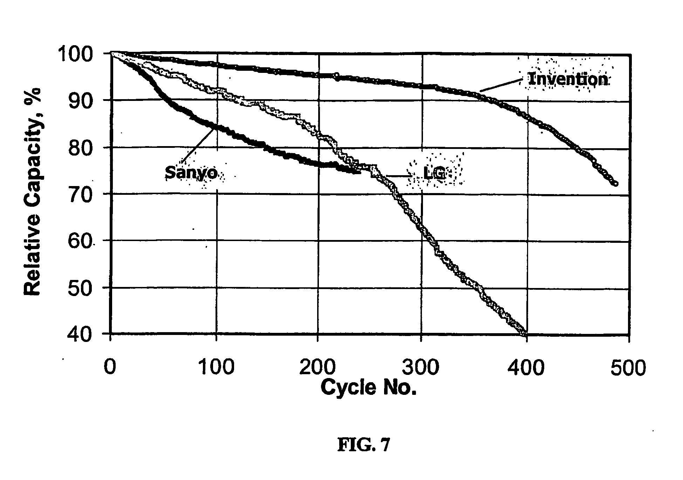

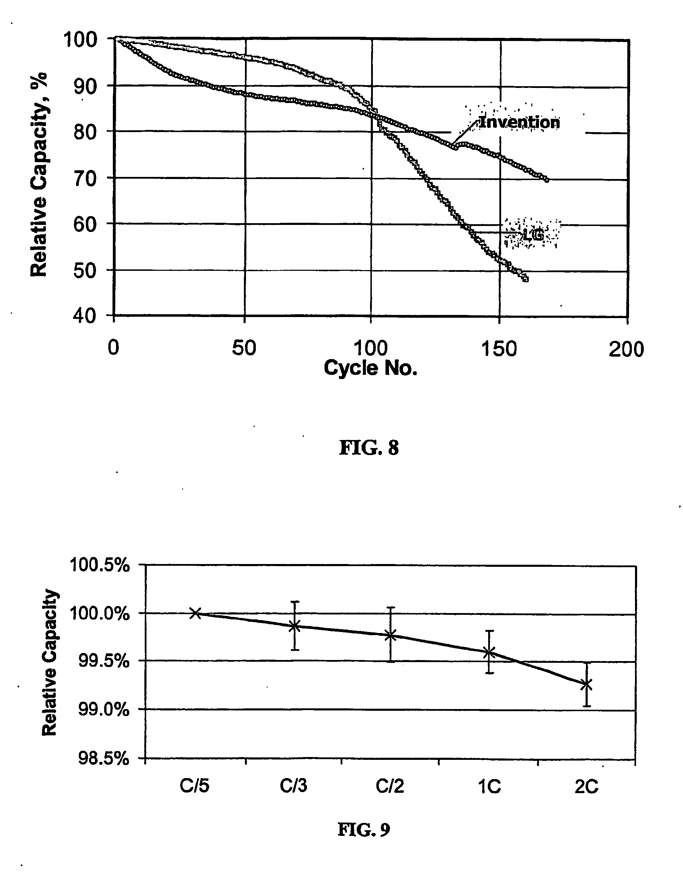

As a comparison example, an LG 18650 of LG in Seoul, Korea ("LG") and a SANYO 18650 cell were tested with the procedures described above. Cells were typically tested at 23 °C (room temperature) and 60 °C. Results of the cell tests were shown in FIGs. 6-9. As can be seen in FIGs. 6-9, a cell of the present invention showed higher voltage (FIG. 6), better cycle life at room temperature (FIG. 7), better cycle life at 60 °C, (FIG. 8) and better rate capability (FIG. 9).

### EQUIVALENTS

While this invention has been particularly shown and described with references to preferred embodiments thereof, it will be understood by those skilled in the art that various changes in form and details may be made therein without departing from the scope of the invention encompassed by the appended claims.

## Claims

1. An active cathode material, comprising a mixture that includes:
i)
a) at least one of a lithium cobaltate and a lithium nickelate, wherein the lithium cobaltate is a modified lithium cobaltate with a least one modifier selected from the group consisting of a lithium modifier and a cobalt modifier of the lithium cobaltate, and wherein the lithium modifier is at least one member selected from the group consisting of magnesium (Mg) and sodium (Na), and wherein the cobalt modifier is at least one member of the group consisting of manganese (Mn), aluminum (Al), boron (B), titanium (Ti), magnesium (Mg), calcium (Ca) and strontium (Sr),
and wherein the lithium nickelate is selected from the group consisting of a lithium nickelate represented by an empirical formula of Li(Ni_{1/3}Co_{1/3}Mn_{1/3})O₂; a lithium nickelate that includes at least one Li atom modifier selected from the group consisting of barium, magnesium, calcium and strontium; and a lithium nickelate represented by an empirical formula of Liₓ₃Ni_{(1-z3)}M'_{z3}O₂ coated with a lithium cobaltate represented by an empirical formula of LiCoO₂ as a gradient coating or a spot-wise coating where:
x3 is greater than 0.05 and less than 1.2;
z3 is greater than 0 and less than 0.5; and
M' is at least one member of the group consisting of cobalt, manganese, aluminum, boron, titanium, magnesium, calcium and strontium; and
b) at least one of a manganate spinel and an olivine compound,
wherein the manganate spinel is represented by an empirical formula of
Li₍₁₊ₓ₁₎(Mn_{1-y1}A'_{y1})₂₋ₓ₁O_{z1}
where:
x1 is equal to or greater than 0.01 and equal to or less than 0.3;
y1 is greater than 0.0 and equal to or less than 0.3;
z1 is equal to or greater than 3.9 and equal to or less than 4.1; and
A' is at least one member of the group consisting of magnesium, aluminum, cobalt, nickel and chromium,
and wherein the olivine compound is represented by an empirical formula of
Li₍₁₊ₓ₂₎A"ₓ₂MPO₄
where:
x2 is equal to or greater than 0.0 and equal to or less than 0.2; and
M is at least one member of the group consisting of iron, manganese, cobalt and magnesium; and
A" is at least one member of the group consisting of sodium, magnesium, calcium, potassium, nickel and niobium; or
ii)
a) a lithium nickelate selected from the group consisting of the lithium nickelate represented by an empirical formula of Li(Ni_{1/3}Co_{1/3}Mn_{1/3})O₂; a lithium nickelate that includes at least one Li atom modifier selected from the group consisting of barium, magnesium, calcium and strontium; and a lithium nickelate represented by an empirical formula of Liₓ₃Ni_{(1-z3)}M'_{z3}O₂ coated with a lithium cobaltate represented by an empirical formula of LiCoO₂ as a gradient coating or a spot-wise coating where:
x3 is greater than 0.05 and less than 1.2;
z3 is greater than 0 and less than 0.5; and
M' is at least one member of the group consisting of cobalt, manganese, aluminum, boron, titanium, magnesium, calcium and strontium; and
b) a manganate spinel represented by an empirical formula of Li₍₁₊ₓ₇₎Mn_{2-y7}O_{z7} where x7 and y7 are each independently equal to or greater than 0.0 and equal to or less than 1.0; and z7 is equal to or greater than 3.9 and equal to or less than 4.2; or
iii) a lithium manganate represented by an empirical formula of LiMn₂O₄ and a lithium cobaltate represented by an empirical formula of LiCoO₂, wherein the weight ratio of LiMn₂O₄: LiCoO₂ is 30 : 70.

2. The active cathode material of Claim 1 i), wherein: (a) the lithium nickelate that includes at least one Li atom modifier further includes at least one Ni atom modifier selected from the group consisting of barium, magnesium, calcium, strontium, aluminum, manganese and boron; or (b) the cathode material includes the olivine compound of formula Li₍₁₋ₓ₂₎A"ₓ₂MPO₄ where A" and x2 are as defined in Claim 1 i) and M is iron or manganese; and in which case optionally wherein the olivine compound is represented by an empirical formula of LiFePO₄ or LiMnPO₄.

3. The active cathode material of Claim 1 i); wherein the cathode material includes one of the lithium nickelates, and further includes the manganate spinel of formula Li₍₁₊ₓ₁₎(Mn_{1-y1}A'_{y1})₂₋ₓ₁O_{z1} wherein x1, y1, z1 and A' are as defined in Claim 1 i); and in which case optionally: (a) wherein the cathode material includes the lithium nickelate of formula Li(Ni_{1/3}Co_{1/3}Mn_{1/3})O₂; or (b) wherein the cathode material includes the lithium nickelate including at least one Li atom modifier; and in which further optionally the lithium nickelate further includes at least one Ni atom modifier selected from the group consisting of barium, magnesium, calcium, strontium, aluminum, manganese and boron; or (c) wherein the cathode material includes the lithium nickelate of formula LiNi_{0.8}Co_{0.15}Al_{0.05}O₂ coated with the lithium cobaltate of formula LiCoO₂ as a gradient coating or a spot-wise coating; or further including a lithium cobaltate; and in which case further optionally wherein the lithium cobaltate is represented by formula LiCoO₂.

4. The active cathode material of Claim 1 i), wherein the cathode material includes one of the lithium nickelates, and further includes the manganate spinel of formula Li₍₁₊ₓ₁₎(Mn_{1-y1}A'_{y1})₂₋ₓ₁O_{z1} wherein x1, y1, z1 and A' are as defined in Claim 1 i) and the modified lithium cobaltate, and in which case optionally wherein the cathode material includes the lithium nickelate including at least one Li atom modifier; and in which case further optionally: (a) the lithium nickelate further includes at least one Ni atom modifier selected from the group consisting of barium, magnesium, calcium, strontium, aluminum, manganese and boron; or (b) wherein the cathode material includes the lithium nickelate of formula LiNi_{0.8}Co_{0.15}Al_{0.05}O₂ coated with the lithium cobaltate of formula LiCoO₂ as a gradient coating or a spot-wise coating; or (c) wherein the cathode material includes the lithium nickelate of formula Li(Ni_{1/3}Co_{1/3}Mn_{1/3})O₂.

5. The active cathode material of Claim 1 i), wherein: (a) the cathode material includes the modified lithium cobaltate and the manganate spinel of formula Li₍₁₊ₓ₁₎(Mn_{1-y1}A'_{y1})₂₋ₓ₁O_{z1} where x1, y1, z1, and A' are as defined in Claim 1 i); or (b) the cathode material includes the modified lithium cobaltate and/or one of the lithium nickelates, and further includes the olivine compound of formula Li₍₁₋ₓ₂₎A"ₓ₂MPO₄ where x2, A" and M are as defined in Claim 1 i); and in which case optionally wherein the cathode material includes the olivine compound of formula Li₍₁₋ₓ₂₎A"ₓ₂MPO₄ where M is iron or manganese.

6. The active cathode material of Claim 1 i), wherein the cathode material includes one of the lithium nickelates, and further includes the olivine compound of formula Li₍₁₋ₓ₂₎A"ₓ₂MPO₄ wherein x2, A" and M are as defined in Claim 1 i); and in which case optionally: (a) wherein the cathode material includes the lithium nickelate including at least one Li atom modifier; and in which case further optionally the lithium nickelate further includes at least one Ni atom modifier selected from the group consisting of barium, magnesium, calcium, strontium, aluminum, manganese and boron; or (b) wherein the cathode material includes the lithium nickelate of formula LiNi_{0.8}Co_{0.15}Al_{0.05}O₂ coated with the lithium cobaltate of formula LiCoO₂ as a gradient coating or a spot-wise coating, or (c) wherein the cathode material includes the lithium nickelate of formula Li(Ni_{1/3}Co_{1/3}Mn_{1/3})O₂.

7. The active cathode material of Claim 1 i), wherein: (a) the cathode material includes the modified lithium cobaltate and one of the lithium nickelates, and further includes the olivine compound of formula Li₍₁₋ₓ₂₎A"ₓ₂MPO₄; in which case optionally either (i) wherein the cathode material includes the lithium nickelate of formula LiNi_{0.8}Co_{0.15}Al_{0.05}O₂ coated with lithium cobaltate of formula LiCoO₂ as a gradient coating or a spot-wise coating; or (ii) wherein the cathode material includes the lithium nickelate of formula Li(Ni_{1/3}Co_{1/3}Mn_{1/3})O₂; or (b) the cathode material includes one of the lithium nickelates, and further includes the manganate spinel of formula Li₍₁₊ₓ₁₎(Mn_{1-y1}A'_{y1})₂₋ₓ₁O_{z1} and the olivine compound of formula Li₍₁₋ₓ₂₎A"ₓ₂MPO₄; where x2, A", M and A' are as defined in Claim 1 i).

8. The active cathode material of Claim 1 ii), wherein: (a) the lithium nickelate that includes at least one Li atom modifier further includes at least one Ni atom modifier selected from the group consisting of barium, magnesium, calcium, strontium, aluminum, manganese and boron; and in which case optionally wherein the manganate spinel is represented by an empirical formula of LiMn₂O₄; or (b) the active cathode material further comprising a lithium cobaltate; and in which case optionally wherein the lithium cobaltate is represented by an empirical formula of LiCoO₂; or the mixture further includes an olivine compound represented by an empirical formula of
Li₍₁₊ₓ₂₎A"ₓ₂MPO₄
where:
x2 is equal to or greater than 0.0 and equal to or less than 0.2; and
M is at least one member of the group consisting of iron, manganese, cobalt and magnesium; and
A" is at least one member of the group consisting of sodium, magnesium, calcium, potassium, nickel and niobium.

9. The active cathode material of any one of Claims 1, 2, 5, 6, 7 and 8, wherein x2 is either:
a) equal to or greater than 0.05 and equal to or less than 0.2; or
b) equal to or greater than 0.00 and equal to or less than 0.1.

10. A lithium-ion battery having a cathode that includes an active cathode material, the active cathode material comprising a mixture that includes:
i)
a) at least one of a lithium cobaltate and a lithium nickelate,
wherein the lithium cobaltate is a modified lithium cobaltate with a least one modifier selected from the group consisting of a lithium modifier and a cobalt modifier and wherein the lithium modifier is at least one member selected from the group consisting of magnesium (Mg) and sodium (Na), and wherein the cobalt modifier is at least one member of the group consisting of manganese (Mn), aluminum (Al), boron (B), titanium (Ti), magnesium (Mg), calcium (Ca) and strontium (Sr),
and wherein the lithium nickelate is selected from the group consisting of a lithium nickelate represented by an empirical formula of Li(Ni_{1/3}Co_{1/3}Mn_{1/3})O₂; a lithium nickelate that includes at least one Li atom modifier selected from the group consisting of barium, magnesium, calcium and strontium; and a lithium nickelate represented by an empirical formula of Liₓ₃Ni_{(1-z3)}M'_{z3}O₂ coated with a lithium cobaltate represented by an empirical formula of LiCoO₂ as a gradient coating or a spot-wise coating where:
x3 is greater than 0.05 and less than 1.2;
z3 is greater than 0 and less than 0.5; and
M' is at least one member of the group consisting of cobalt, manganese, aluminum, boron, titanium, magnesium, calcium and strontium; and
b) at least one of a manganate spinel and an olivine compound, wherein the manganate spinel is represented by an empirical formula
of Li₍₁₊ₓ₁₎(Nn_{1-y1}A'_{y1})₂₋ₓ₁O_{z1} where:
x1 is equal to or greater than 0.01 and equal to or less than 0.3;
y1 is greater than 0.0 and equal to or less than 0.3;
z1 is equal to or greater than 3.9 and equal to or less than 4.1; and
A' is at least one member of the group consisting of magnesium, aluminum, cobalt, nickel and chromium,
and wherein the olivine compound is represented by an empirical formula of Li₍₁₋ₓ₂₎A"ₓ₂MPO₄ where:
x2 is equal to or greater than 0.0 and equal to or less than 0.2; and
M is at least one member of the group consisting of iron, manganese, cobalt and magnesium; and
A" is at least one member of the group consisting of sodium, magnesium, calcium, potassium, nickel and niobium; or
ii)
a) a lithium nickelate selected from the group consisting of a lithium
nickelate represented by an empirical formula of Li(Ni_{1/3}Co_{1/3}Mn_{1/3})O₂; a lithium nickelate that includes at least one Li atom modifier selected from the group consisting of barium, magnesium, calcium and strontium; and a lithium nickelate represented by an empirical formula of Liₓ3Ni_{(1-z3)}M'_{z3}O₂ coated with a lithium cobaltate represented by an empirical formula of LiCoO₂ as a gradient coating or a spot-wise coating where:
x3 is greater than 0.05 and less than 1.2;
z3 is greater than 0 and less than 0.5; and
M' is at least one member of the group consisting of cobalt, manganese, aluminum, boron, titanium, magnesium, calcium and strontium; and
b) a manganate spinel represented by an empirical formula of Li₍₁₊ₓ₇₎Mn_{2-y7}O_{z7} where x7 and y7 are each independently equal to or greater than 0.0 and equal to or less than 1.0; and z7 is equal to or greater than 3.9 and equal to or less than 4.2, wherein the battery has a capacity greater than about 3.0 Ah; or includes a lithium manganate represented by an empirical formula of LiMn₂O₄ and lithium cobaltate represented by an empirical formula of LiCoO₂, wherein the weight ratio of LiMn₂O₄: LiCoO₂ is 30: 70, and wherein the battery has a capacity greater than about 3.0 Ah.

11. The lithium-ion battery of Claim 10 i), wherein: (a) the lithium nickelate that includes at least one Li atom modifier further includes at least one Ni atom modifier selected from the group consisting ofbarium, magnesium, calcium, strontium, aluminum, manganese and boron; or (b) the cathode material includes the lithium nickelate that includes at least one Li modifier; or (c) the cathode material includes the lithium nickelate coated with the lithium cobaltate of formula LiCoO₂ as a gradient coating or a spot-wise coating; in which case optionally wherein the lithium nickelate is represented by an empirical formula of LiNi_{0.8}Co_{0.15}Al_{0.05}O₂ coated with the lithium cobaltate of formula LiCoO₂ as a gradient coating or a spot-wise coating; or (d) wherein the cathode material includes the lithium nickelate of formula Li(Ni_{1/3}Co_{1/3}Mn_{1/3})O₂; or (e) wherein the cathode material includes an olivine compound of formula Li₍₁₋ₓ₂₎A"ₓ₂MPO₄ where M is iron or manganese; and x2, A" are as defined in claim 10 i) in which case optionally wherein the olivine compound is represented by an empirical formula of LiFePO₄ or LiMnPO₄.

12. The lithium-ion battery of Claim 10 or Claim 11, wherein x2 is either:
a) equal to or greater than 0.05 and equal to or less than 0.2; or
b) equal to or greater than 0.00 and equal to or less than 0.1.

13. A method of forming a lithium-ion battery, comprising:
a1) forming an active cathode material including a mixture that includes:
i) at least one of a lithium cobaltate and a lithium nickelate, wherein the lithium cobaltate is a modified lithium cobaltate with a least one modifier selected from the group consisting of a lithium modifier and a cobalt modifier of the lithium cobaltate, and wherein the lithium modifier is at least one member selected from the group consisting of magnesium (Mg) and sodium (Na), and wherein the cobalt modifier is at least one member of the group consisting of manganese (Mn), aluminum (A1), boron (B), titanium (Ti), magnesium (Mg), calcium (Ca) and strontium (Sr),
and wherein the lithium nickelate is selected from the group consisting of a_lithium_nickelate represented by an empirical formula of Li(Ni_{1/3}Co_{1/3}Mn_{1/3})O₂; a lithium nickelate that includes at least one Li atom modifier selected from the group consisting of barium, magnesium, calcium and strontium; and a lithium nickelate represented by an empirical formula of Liₓ₃Ni_{(1-z3)}M'_{z3}O₂ coated with a lithium cobaltate represented by an empirical formula of LiCoO₂ as a
gradient coating or a spot-wise coating where:
x3 is greater than 0.05 and less than 1.2;
z3 is greater than 0 and less than 0.5; and
M' is at least one member of the group consisting of cobalt, manganese, aluminum, boron, titanium, magnesium, calcium and strontium; and
ii) at least one of a manganate spinel and an olivine compound, wherein the manganate spinel is represented by an empirical formula of Li₍₁₊ₓ₁₎(Mn_{1-y1}A'_{y1})₂₋ₓ₁O_{z1} where:
x1 is equal to or greater than 0.01 and equal to or less than 0.3;
y1 is greater than 0.0 and equal to or less than 0.3;
z1 is equal to or greater than 3.9 and equal to or less than 4.1; and
A' is at least one member of the group consisting of magnesium, aluminum, cobalt, nickel and chromium,
and wherein the olivine compound is represented by an empirical formula of Li₍₁₋ₓ₂₎A"ₓ₂MPO₄ where:
x2 is equal to or greater than 0.0 and equal to or less than 0.2; and
M is at least one member of the group consisting of iron, manganese, cobalt and magnesium; and
A" is at least one member of the group consisting of sodium, magnesium, calcium, potassium, nickel and niobium; or
a2) forming an active cathode material including a mixture that includes:
i) a lithium nickelate selected from the group consisting of a lithium nickelate represented by an empirical formula of Li(Ni_{1/3}Co_{1/3}Mn_{1/3})O₂; a lithium nickelate that includes at least one Li atom modifier selected from the group consisting of barium, magnesium, calcium and strontium; and a lithium nickelate represented by an empirical formula of
Liₓ₃Ni_{(1-z3)}M'_{z3}O₂ coated with a lithium cobaltate represented by an empirical formula of LiCoO₂ as a gradient coating or a spot-wise coating where:
x3 is greater than 0.05 and less than 1.2;
z3 is greater than 0 and less than 0.5; and
M' is at least one member of the group consisting of cobalt, manganese, aluminum, boron, titanium, magnesium, calcium and strontium; and
ii) a manganate spinel represented by an empirical formula of Li₍₁₊ₓ₇₎Mn_{2-y7}O_{z7} where x7 and y7 are each independently equal to or greater than 0.0 and equal to or less than 1.0; and z7 is equal to or greater than 3.9 and equal to or less than 4.2;
wherein the lithium-ion battery has a capacity greater than about 3.0Ah/cell; or
a3) forming an active cathode material including a mixture that includes a lithium manganate represented by an empirical formula of LiMn₂O₄ and a lithium cobaltate represented by an empirical formula of LiCoO₂, wherein the weight ratio of LiMn₂O₄: LiCoO₂ is 30: 70; and wherein the lithium-ion battery has a capacity greater than about 3.0 Ah/cell;
b) forming a cathode electrode with the active cathode material of a1), a2) or a3); and
c) forming an anode electrode in electrical contact with the cathode via an electrolyte, thereby forming the lithium-ion battery.

14. The method of forming a lithium-ion battery of Claim 13, wherein x2 is either:
a) equal to or greater than 0.05 and equal to or less than 0.2; or
b) equal to or greater than 0.00 and equal to or less than 0.1.

15. A battery pack comprising a plurality of cells, wherein each of the cells includes an active cathode material of any one of Claims 1 to 9; and in which case optionally: (a) wherein the capacity of the cells is equal to or greater than about 3.3 Ah/cell; or (b) wherein the internal impedance of the cells is less than about 50 miliohms; or (c) wherein the cells are in series and no cells are connected in parallel.

16. A system comprising:
a) a portable electronic device; and
b) a battery pack that includes a plurality of cells, each of the cells being connected with each other, wherein each of the cells includes an active cathode material of any one of Claims 1 to 9; and in which case optionally wherein the electronic portable device is selected from the group consisting of laptop computer, power tool, PDA, cellular phone, and hybrid-electric vehicle.

## Patentansprüche

1. Aktives Kathodenmaterial aus einem Gemisch, das Folgendes enthält:
i)
a) zumindest eine der Verbindungen eines Lithiumcobaltats und eines Lithiumnickelats, wobei das Lithiumcobaltat ein modifiziertes Lithiumcoltat mit zumindest einem Modifikator aus der aus einem Lithiummodifikator und einem Cobaltmodifikator des Lithiumcobaltats bestehendes Gruppe ist, wobei der Lithiummodifikator zumindest ein Element aus der aus Magnesium (Mg) und Natrium (Na) bestehenden Gruppe ist und wobei der Cobaltmodifikator zumindest ein Element der aus Mangan (Mn), Aluminium (Al), Bor (B), Titan (Ti), Magnesium (Mg), Calcium (Ca) und Strontium (Sr) bestehenden Gruppe ist, und wobei das Lithiumnickelat ausgewählt ist aus der Gruppe, bestehend aus einesm Lithiumnickelat, dargestellt durch eine empirische Formel von Li (Ni_{1/3}Co_{1/3}Mn_{1/3})O₂, einem Lithiumnickelat, das zumindest einen Li-Atom-Modifikator aus der Gruppe von Barium, Magnesium, Calcium und Strontium enthält, und einem Lithiumnickelat, dargestellt durch eine empirische Formel von Liₓ₃Ni_{(1-z3)}M'_{z3}O₂, beschichtet mit einem Lithiumcobaltat, dargestellt durch eine empirische Forme von LiCoO₂, als Gradientenbeschichtung oder stellenweise Beschichtung, wobei
x3 größer ist als 0,05 und kleiner als 1,2,
z3 größer ist als 0 und kleiner als 0,5 und
M' zumindest ein Element aus der aus Cobalt, Mangan, Aluminium, Bor, Titan, Magnesium, Calcium und Strontium bestehenden Gruppe ist, und
b) zumindest eine der Verbindungen eines Manganatspinells und einer Olivinverbindung,
wobei der Manganatspinell dargestellt ist durch eine empirische Formel von
Li₍₁₊ₓ₁₎(Mn_{1-y1}A'_{y1})₂₋ₓ₁O_{z1},
wobei
x1 gleich oder größer ist als 0,01 und gleich oder kleiner ist als 0,3,
y1 größer ist als 0,0 und gleich oder kleiner als 0,3,
z1 gleich oder größer ist als 3,9 und gleich oder kleiner ist als 4,1, und
A' zumindest ein Element aus der aus Magnesium, Aluminium, Cobalt, Nickel und Chrom bestehenden Gruppe ist,
und wobei die Olivinverbindung dargestellt ist durch eine empirische Formel von
Li₍₁₊ₓ₂₎A"ₓ₂MPO₄,
wobei
x2 gleich oder größer ist als 0,0 und gleich oder kleiner ist als 0,2, und
M zumindest ein Element aus der aus Eisen, Mangan, Cobalt und Mag- nesium bestehenden Gruppe ist und
A" zumindest ein Element aus der aus Natrium, Magnesium, Calcium, Kalium, Nickel und Niobium bestehenden Gruppe ist, oder
ii)
a) ein Lithiumnickelat, ausgewählt aus der Gruppe von einem durch eine empirische Formel von Li (Ni_{1/3}Co_{1/3}Mn_{1/3})O₂ dargestellten Lithiumnickelat, ein Lithiumnickelat, das zumindest einen Li-Atom-Modifikator aus der aus Barium Li (Ni_{i/3}CO_{1/3} Mn_{1/3})O₂ dargestellten Lithiumnickelat, ein Lithiumnickelat, das zumindest einen Li-Atom-Modifikator aus der aus Barium, Magnesium, Calcium und Strontium bestehenden Gruppe enthält, und einem Lithiumnickelat, dargestellt durch eine empirische Formel von Liₓ₃Ni_{(1-z3)}M'_{z3}O₂, beschichtetet mit einem Lithiumcobaltat, dargestellt durch eine empirische Formel von LiCoO₂, als Gradientenbeschichtung oder stellenweise Beschichtung, wobei
x3 größer ist als 0,05 und kleiner als 1,2
z3 größer ist als 0 und kleiner als 0,5 und
M' zumindest ein Element der aus Cobalt, Mangan, Aluminium, Bor, Titan, Magnesium, Calcium und Strontium bestehenden Gruppe ist, und
b) einen Manganatspinell, dargestellt durch eine empirische Formel von Li₍₁₊ₓ₇₎Mn_{2-y7} O_{z7}, wobei x7 und y7 jeweils unabhängig gleich oder größer sind als 0,0 und gleich oder kleiner sind als 1,0 und z7 gleich oder größer ist als 3,9 und gleich oder kleiner als 4,2, oder
iii) ein Lithiummanganat, dargestellt durch eine empirische Formel von LiMn₂O₄, und ein Lithiumcobaltat, dargestellt durch eine empirische Formel von LiCoO₂ wobei das Gewichtsverhältnis von LiMn₂O₄ LiCoO₂ 30 : 70 ist.

2. Aktives Kathodenmaterial nach Anspruch 1 i), wobei (a) das Lithiumnickelat, das zumindest einen Li-Atom-Modifikator enthält, ferner zumindest einen Ni-Atom-Modifikator aus der aus Barium, Magnesium, Calcium, Strontium, Aluminium, Mangan und Bor bestehenden Gruppe enthält, oder (b) das Kathodenmaterial die Olivinverbindung der Formel Li₍₁₋ₓ₂₎ A" ₓ₂ MPO₄ enthält, wobei A" und x2 die Definition gemäß Anspruch 1 i) aufweisen und M Eisen oder Mangan ist und in welchem Fall wahlweise die Olivinverbindung durch eine empirische Formel von LiFePO₄ oder LiMnPO₄. dargestellt ist.

3. Aktives Kathodenmaterial nach Anspruch 1 i), wobei das Kathodenmaterial eines der Lithiumnickelate enthält und ferner den Manganatspinell der Formel Li₍₁₊ₓ₁₎(Mn_{1-y1}A'_{y1})₂₋ₓ₁O_{z1} enthält, wobei x1, y1, z1 und A' die Definition nach Anspruch 1 i) aufweisen und in welchem Fall wahlweise (a) das Kathodenmaterial das Lithiumnickelat der Formel Li(Ni_{1/3}Co_{1/3}Mn_{1/3})O₂ enthält, oder (b) das Kathodenmaterial das Lithiumnickelat einschließlich zumindest eines Li-Atom-Modifikators enthält und in welchem Fall ferner wahlweise das Lithiumnickelat ferner zumindest einen Ni-Atom-Modifikator aus der aus Barium, Magnesium, Calcium, Strontium, Aluminium, Mangan und Bor bestehenden Gruppe enthält, oder (c) wobei das Kathodenmaterial das Lithiumnickelat der Formel Li-Ni_{0.8}Co_{0.15}Al_{0.05}O₂ enthält, beschichtet mit dem Lithiumcobaltat der Formel Li-CoO₂ als Gradientenbeschichtung oder stellenweise Beschichtung, oder ferner ein Lithiumcobaltat enthält, in welchem Fall ferner wahlweise das Lithiumcobaltat dargestellt ist durch die Formel LiCoO₂.

4. Aktives Kathodenmaterial nach Anspruch 1 i), wobei das Kathodenmaterial zumindest eines der Lithiumnickelate enthält und ferner den Manganatspinell der Formel Li₍₁₊ₓ₁₎(Mn_{1-y1}A'_{y1})₂₋ₓ₁O_{z1}, wobei x1, y1, z1 und A' die Definition gemäß Anspruch 1 i) aufweisen, und das modifizierte Lithiumcobaltat enthält, in welchem Fall wahlweise das Kathodenmaterial das Lithiumnickelat enthält, das zumindest einen Li-Atom-Modifikator enthält, und in welchem Fall ferner wahlweise (a) das Lithiumnickelat ferner zumindest einen Ni-Atom-Modifikator aus der aus Barium, Magnesium, Calcium, Strontium, Aluminium, Mangan und Bor bestehenden Gruppe enthält, oder (b) das Kathodenmaterial das Lithiumnickelat der Formel LiNi_{0.8}Co_{0.15}Al_{0.05}O₂ enthält, beschichtet mit dem Lithiumcobaltat der Formel LiCoO₂ als Gradientenbeschichtung oder stellenweise Beschichtung, oder (c) wobei das Kathodenmaterial das Lithiumnickelat der Formel Li(Ni_{1/3}Co_{1/3}Mn_{1/3})O₂ enthält.

5. Aktives Kathodenmaterial nach Anspruch 1 i), wobei (a) das Kathodenmaterial das modifiziertes Lithiumcobaltat und den Manganatspinell der Formel Li₍₁₊ₓ₁₎(Mn_{1-y1}A'_{y1})₂₋ₓ₁O_{z1} enthält, wobei x1, y1, z1 und A' die Definition gemäß Anspruch 1 i) aufweisen, oder (b) das Kathodenmaterial das modifizierte Lithiumcobaltat und /oder eines der Lithiumnickelate enthält und ferner die Olivinverbindung der Formel Li₍₁₋ₓ₂₎ A" ₓ₂ MPO₄ enthält, wobei x2, A" und M die Definition gemäß Anspruch 1 i) aufweisen und in welchem Fall wahlweise das Kathodenmaterial die Olivinverbindung der Formel Li₍₁₋ₓ₂₎ A" ₓ₂ MPO₄ enthält, wobei M Eisen oder Mangan ist.

6. Aktives Kathodenmaterial nach Anspruch 1 i), wobei das Kathodenmaterial eines der Lithiumnickelate enthält und ferner die Olivinverbindung der Formel Li₍₁₋ₓ₂₎ A" ₓ₂ MPO₄ enthält, wobei x2, A" und M die Definition gemäß Anspruch 1 i) aufweisen und in welchem Fall wahlweise (a) das Kathodenmaterial das Lithiumnickelat einschließlich zumindest eines Li-Atom-Modifikators enthält und welchem Fall ferner wahlweise das Lithiumnickelat ferner zumindest einen Ni-Atom-Modifikator aus der aus Barium, Magnesium, Calcium, Strontium, Aluminium, Mangan und Bor bestehenden Gruppe enthält, oder (b) wobei das Kathodenmaterial das Lithiumnickelat der Formel LiNi_{0.8}Co_{0.15}Al_{0.05}O₂ enthält, beschichtet mit dem Lithiumcobaltat der Formel LiCoO₂ als Gradientenbeschichtung oder stellenweise Beschichtung, oder (c) wobei das Kathodenmaterial das Lithiumnickelat der Formel Li(Ni_{1/3}Co_{1/3}Mn_{1/3})O₂ enthält.

7. Aktives Kathodenmaterial nach Anspruch 1 i), wobei (a) das Kathodenmaterial das modifiziertes Lithiumcobaltat und eines der Lithiumnickelate enthält und ferner auch die Olivinverbindung der Formel Li₍₁₋ₓ₂₎ A" ₓ₂ MPO₄ enthält, in welchem Fall wahlweise entweder (i) das Kathodenmaterial das Lithiumnickelat LiNi_{0.8}Co_{0.15}Al_{0.05}O₂ enthält, beschichtet mit Lithiumcobaltat der Formel LiCoO₂ als Gradientenbeschichtung oder stellenweise Beschichtung, oder (ii) wobei das Kathodenmaterial das Lithiumnickelat Li(Ni_{1/3}Co_{1/3}Mn_{1/3})O₂ enthält, oder (b) das Kathodenmaterial eines der Lithiumnickelate enthält und ferner auch den Manganatspinell der Li₍₁₊ₓ₁₎(Mn_{1-y1}A'_{y1})₂₋ₓ₁O_{z1} und die Olivinverbindung der Formel Li₍₁₋ₓ₂₎ A" ₓ₂ MPO₄ enthält, wobei x2, A", M und A' die Definition gemäß Anspruch 1 i) aufweisen.

8. Aktives Kathodenmaterial nach Anspruch 1 ii), wobei (a) das Lithiumnickelat das zumindest einen Li-Atom-Modifikator enthält, ferner zumindest einen Ni-Atom-Modifikator aus der aus Barium, Magnesium, Calcium, Strontium, Aluminium, Mangan und Bor bestehenden Gruppe enthält und in welchem Fall wahlweise der Manganatspinell dargestellt ist durch eine empirische Formel von LiMn₂0₄ oder (b) das aktive Kathodenmaterial ferner ein Lithiumcobaltat umfasst und in welchem Fall wahlweise das Lithiumcobaltat dargestellt ist durch eine empirische Formel von LiCoO₂, oder das Gemisch ferner eine Olivinverbindung enthält, dargestellt durch eine empirische Formel von
Li₍₁₊ₓ₂₎A"ₓ₂MPO₄
wobei:
x2 gleich oder größer ist als 0,0 und gleich oder kleiner ist als 0,2 und
M zumindest ein Element aus der aus Eisen, Mangan, Cobalt und Mag- nesium bestehenden Gruppe ist und
A' zumindest ein Element aus der aus Natrium, Magnesium, Calcium, Kalium, Nickel und Niobium bestehenden Gruppe ist.

9. Aktives Kathodenmaterial nach einem der Ansprüche 1, 2, 5, 6, 7 und 8, wobei x2 entweder
a) gleich oder größer ist als 0,05 und gleich oder kleiner ist als 0,2 oder
b) gleich oder größer ist als 0,00 und gleich oder kleiner ist als 0,1.

10. Lithiumionen-Batterie mit einer Kathode, die ein aktives Kathodenmaterial enthält, wobei das aktive Kathodenmaterial eine Mischung umfasst, die folgendes enthält:
i)
a) zumindest eine der Verbindungen Lithiumcobaltat und Lithiumnickelat, wobei das Lithiumcobaltat ein modifiziertes Lithiumcobaltat mit zumindest einem Modifikator aus der aus einem Lithiummodifikator und einem Cobaltmodifikator bestehenden Gruppe ist, wobei der Lithiummodifikator zumindest ein Element aus der aus Magnesium (Mg) und Natrium (Na) bestehenden Gruppe ist und wobei der Cobaltmodifikator zumindest ein Element der aus Mangan (Mn), Aluminium (Al), Bor (B), Titan (Ti), Magnesium (Mg), Calcium (Ca) und Strontium (Sr) bestehenden Gruppe ist, und wobei das Lithiumnickelat ausgewählt ist aus der Gruppe, bestehend aus einem Lithiumnickelat, dargestellt durch eine empirische Formel von Li (Ni_{1/3}Co_{1/3}Mn_{1/3})O₂, einem Lithiumnickelat, das zumindest einen Li-Atom-Modifikator aus der Gruppe von Barium, Magnesium, Calcium und Strontium enthält, und einem Lithiumnickelat, dargestellt durch eine empirische Formel von Liₓ₃Ni_{(1-z3)}M'_{z3}O₂, beschichtet mit einem Lithiumcobaltat, dargestellt durch eine empirische Formel von LiCoO₂, als Gradientenbeschichtung oder stellenweise Beschichtung, wobei
x3 größer ist als 0,05 und kleiner als 1,2,
z3 größer ist als 0 und kleiner als 0,5 und
M' zumindest ein Element aus der aus Cobalt, Mangan, Aluminium, Bor, Titan, Magnesium, Calcium und Strontium bestehenden Gruppe ist, und
b) zumindest eine der Verbindungen eines Manganatspinells und einer Olivinverbindung,
wobei der Manganatspinell dargestellt ist durch eine empirische Formel von
Li₍₁₊ₓ₁₎(Mn_{1-y1}A'_{y1})₂₋ₓ₁O_{z1}
wobei
x1 gleich oder größer ist als 0,01 und gleich oder kleiner ist als 0,3,
y1 größer ist als 0,0 und gleich oder kleiner als 0,3,
z1 gleich oder größer ist als 3,9 und gleich oder kleiner ist als 4,1, und
A' zumindest ein Element aus der aus Magnesium, Aluminium, Cobalt, Nickel und Chrom bestehenden Gruppe ist,
und wobei die Olivinverbindung dargestellt ist durch eine empirische Formel von
Li₍₁₊ₓ₂₎A"ₓ₂MPO₄
wobei
x2 gleich oder größer ist als 0,0 und gleich oder kleiner ist als 0,2, und
M zumindest ein Element aus der aus Eisen, Mangan, Cobalt und Mag- nesium bestehenden Gruppe ist und
A" zumindest ein Element aus der aus Natrium, Magnesium, Calcium, Kalium, Nicl<el und Niobium bestehenden Gruppe ist, oder
ii)
a) ein Lithiumnickelat, ausgewählt aus der Gruppe von einem durch eine empirische Formel von
Li (Ni_{1/3}Co_{1/3}Mn_{1/3})O₂
dargestellten Lithiumnickelat, einem Lithiumnickelat, das zumindest einen Li-Atom-Modifikator aus der aus Barium Magnesium, Calcium und Strontium bestehenden Gruppe enthält, und einem Lithiumnickelat, dargestellt durch eine empirische Formel von Liₓ₃Ni_{(1-z3)}M'_{z3}O₂, beschichtetet mit einem Lithiumcobaltat, dargestellt durch eine empirische Formel von LiCoO₂, als Gradientenbeschichtung oder stellenweise Beschichtung, wobei
x3 größer ist als 0,05 und kleiner als 1,2
z3 größer ist als 0 und kleiner als 0,5 und
M' zumindest ein Element der aus Cobalt, Mangan, Aluminium, Bor, Titan, Magnesium, Calcium und Strontium bestehenden Gruppe ist, und
b) einen Manganatspinell, dargestellt durch eine empirische Formel von Li₍₁₊ₓ₇₎Mn_{(2-y7)}O_{z7}, wobei x7 und y7 jeweils unabhängig gleich oder größer sind als 0,0 und gleich oder kleiner sind als 1,0 und z7 gleich oder größer ist als 3,9 und gleich oder kleiner als 4,2, wobei die Batterie eine Kapazität hat, die größer ist als etwa 3,0 Ah, oder
ein Lithiummanganat, dargestellt durch eine empirische Formel von LiMn₂O₄ und ein Lithiumcobaltat, dargestellt durch eine empirische Formel von LiCoO₂, enthält, wobei das Gewichtsverhältnis von LiMn₂O₄ : LiCoO₂ 30 : 70. ist
und wobei die Batterie eine Kapazität hat, die größer ist als etwa 3,0 Ah.

11. Lithiumionen-Batterie nach Anspruch 10 i), wobei (a) das Lithiumnickelat, das zumindest einen Li-Atom-Modifikator enthält, ferner zumindest einen Ni-Atom-Modifikator aus der aus Barium, Magnesium, Calcium, Strontium, Aluminium, Mangan und Bor bestehenden Gruppe enthält, oder (b) das Kathodenmaterial das Lithiumnickelat enthält, das zumindest einen Li-Modifikator enthält, oder (c) das Kathodenmaterial das Lithiumnickelat enthält, das mit dem Lithiumcobaltat der Formel LiCoO₂ als Gradientenbeschichtung oder stellenweise Beschichtung beschichtet ist, in welchem Fall wahlweise das Lithiumnickelat dargestellt ist durch eine empirische Formel von LiNi_{0.8}Co_{0.15}Al_{0.05}O₂, beschichtet mit dem Lithiumcobaltat der Formel LiCoO₂ als Gradientenbeschichtung oder stellenweise Beschichtung, oder (d) wobei das Kathodenmaterial das Lithiumnickelat der Formel Li (Ni_{1/3}CO_{1/3} Mn_{1/3})O₂ enthält oder (e) wobei das Kathodenmaterial eine Olivinverbindung der Formel Li₍₁₋ₓ₂₎ A" ₓ₂ MPO₄ enthält, wobei M Eisen oder Mangan ist und x2, A" die Definition gemäß Anspruch 10 i) aufweisen, in welchem Fall wahlweise die Olivinverbindung dargestellt ist durch eine empirische Formel von LiFeP0₄ oder LiMnPO₄.

12. Lithiumionen-Batterie nach Anspruch 10 oder Anspruch 11, wobei x2 entweder
a) gleich oder größer ist als 0,05 und gleich oder kleiner ist als 0,2 oder
b) gleich oder größer ist als 0,00 und gleich oder kleiner ist als 0,1.

13. Verfahren zum Bilden einer Lithiumionen-Batterie, bei dem
a1) ein aktives Kathodenmaterial aus einem Gemisch gebildet wird, das Folgendes enthält:
i) zumindest eine der Verbindungen eines Lithiumcobaltats und eines Lithiumnickelats, wobei das Lithiumcobaltat ein modifiziertes Lithiumcobaltat mit zumindest einem Modifikator aus der aus einem Lithium-Modifikator und einem Cobalt-Modifikator des Lithiumcobaltats bestehenden Gruppe ist und wobei der Lithium-Modifikator zumindest ein Element aus der aus Magnesium (Mg) und Natrium (Na) bestehenden Gruppe ist und wobei der Cobaltmodifikator zumindest ein Element aus der aus Mangan (Mn), Aluminium (Al), Bor (B), Titan (Ti), Magnesium (Mg), Calcium (Ca) und Strontium (Sr) bestehenden Gruppe ist,
und wobei das Lithiumnickelat ausgewählt ist aus der Gruppe, von einem Lithiumnickelat, das durch eine empirische Formel von Li (Ni_{1/3}CO_{1/3} Mn_{1/3})O₂ dargestellt ist, einem Lithiumnickelat, das zumindest einen Li-Atom-Modifikator aus der aus Barium, Magnesium, Calcium und Strontium bestehenden Gruppe enthält, und einem Lithiumnickelat, dargestellt durch eine empirische Formel von Liₓ₃Ni_{(1-z3)}M'_{z3}O₂, beschichtet mit einem Lithiumcobaltat, dargestellt durch eine empirische Formel von LiCoO₂, als Gradientenbeschichtung oder stellenweise Beschichtung, wobei
x3 größer ist als 0,05 und kleiner als 1,2,
z3 größer ist als 0 und kleiner als 0,5 und
M' zumindest ein Element aus der aus Cobalt, Mangan, Aluminium, Bor, Titan, Magnesium, Calcium und Strontium bestehenden Gruppe ist, und
ii) zumindest eine der Verbindungen eines Manganatspinells und einer Olivinverbindung, wobei der Manganatspinell dargestellt ist durch eine empirische Formel von Li₍₁₊ₓ₁₎ (Mn, _{1-y1}A'_{yl})₂₋ₓ₁O_{z1}, wobei
x1 gleich oder größer ist als 0,01 und gleich oder kleiner als 0,3,
y1 größer ist als 0,0 und gleich oder kleiner als 0,3,
z1 gleich oder größer ist als 3,9 und gleich oder kleiner als 4,1 und
A' zumindest ein Element aus der aus Magnesium, Aluminium, Cobalt, Nickel und Chrom bestehenden Gruppe ist,
und wobei die Olivinverbindung dargestellt ist durch eine empirische Formel von Li₍₁₋ₓ₂₎ A" ₓ₂ MPO₄, wobei
x2 gleich oder größer ist als 0,0 und gleich oder kleiner als 0,2,
M zumindest ein Element aus der aus Eisen, Mangan, Cobalt und Magnesium bestehenden Gruppe ist und
A" zumindest ein Element aus der aus Natrium, Magnesium, Calcium, Kalium, Nickel und Niobium bestehenden Gruppe ist, oder
a2) ein aktives Kathodenmaterial aus einem Gemisch gebildet wird, das Folgendes enthält:
i) ein Lithiumnickelat, ausgewählt aus der Gruppe von einem Lithiumnickelat, das durch eine empirische Formel von Li (Ni_{1/3}CO_{1/3} Mn_{1/3})O₂ dargestellt ist, einem Lithiumnickelat, das zumindest einen Li-Atom-Modifikator aus der aus Barium, Magnesium, Calcium und Strontium bestehenden Gruppe enthält, und einem Lithiumnickelat, dargestellt durch eine empirische Formel von Liₓ₃Ni_{(1-z3})M'_{z3}O₂, beschichtet mit einem Lithiumcobaltat, dargestellt durch eine empirische Formel von LiCoO₂, als Gradientenbeschichtung oder stellenweise Beschichtung, wobei
x3 größer ist als 0,05 und kleiner als 1,2,
z3 größer ist als 0 und kleiner als 0,5 und
M' zumindest ein Element aus der aus Cobalt, Mangan, Aluminium, Bor, Titan, Magnesium, Calcium und Strontium bestehenden Gruppe ist, und
ii) einen Manganatspinell, dargestellt durch eine empirische Formel von Li₍₁₊ₓ₇₎Mn_{2y7} O_{z7}, wobei x7 und y7 jeweils unabhängig gleich oder größer sind als 0,0 und gleich oder kleiner als 1,0 und z7 gleich oder größer ist als 3,9 und gleich oder kleiner als 4,2, wobei die Lithiumionen-Batterie eine Kapazität hat, die größer ist als etwa 3,0 Ah/Zelle, oder
a3) ein aktives Kathodenmaterial aus einem Gemisch gebildet wird, das ein Lithiummanganat, dargestellt durch eine empirische Formel von LiMn₂O₄ und ein Lithiumcobaltat, dargestellt durch eine empirische Formel von LiCoO₂, enthält, wobei das Gewichtsverhältnis von LiMn₂O₄ : LiCaO₂ 30 : 70 ist und wobei die Lithiumionen-Batterie eine Kapazität hat, die größer ist als etwa 3,0 Ah/Zelle,
b) eine Kathodenelektrode mit dem aktiven Kathodenmaterial von a1), a2) oder a3) gebildet wird und
c) eine Anodenelektrode in elektrischem Kontakt mit der Kathode über einen Elektrolyten gebildet wird, wodurch die Lithiumionen-Batterie gebildet wird.

14. Verfahren zum Bilden einer Lithiumionen-Batterie nach Anspruch 13, wobei x2 entweder
a) gleich oder größer ist als 0,05 und gleich oder kleiner als 0,2 oder
b) gleich oder größer ist als 0,00 und gleich oder kleiner als 0,1.

15. Batterieblock mit einer Mehrzahl von Zellen, wobei jede der Zellen ein aktives Kathodenmaterial nach einem der Ansprüche 1 bis 9 aufweist und in welchem Fall wahlweise (a) die Kapazität der Zellen gleich oder größer ist als etwa 3,3 Ah/Zelle oder (b) die innere Impedanz der Zellen kleiner ist als etwa 50 Milliohm oder (c) wobei die Zellen in Reihe angeordnet und keine Zellen parallel geschaltet sind.

16. System, bestehend aus
a) einer tragbaren elektronischen Vorrichtung und
b) einem Batterieblock, der eine Mehrzahl von Zellen enthält, wobei die Zellen jeweils miteinander verbunden sind, jede der Zellen ein aktives Kathodenmaterial nach einem der Ansprüche 1 bis 9 aufweist und in welchem Fall wahlweise das elektronische tragbare Gerät der aus Laptop-Computer, Elektrowerkzeug, PDA, Mobiltelefon und Hybrid-Elektrofahrzeug bestehenden Gruppe entnommen ist.

## Revendications

1. Matériau actif de cathode, comprenant un mélange qui comporte :
i)
a) au moins l'un parmi un cobaltate de lithium et un nickelate de lithium, dans lequel le cobaltate de lithium est un cobaltate de lithium modifié par au moins l'un des modificateurs choisis dans le groupe constitué d'un modificateur du lithium et d'un modificateur du cobalt du cobaltate de lithium, et dans lequel le modificateur du lithium est au moins un élément choisi dans le groupe constitué du magnésium (Mg) et du sodium (Na), et dans lequel le modificateur du cobalt est au moins un élément du groupe constitué du manganèse (Mn), de l'aluminium (Al), du bore (B), du titane (Ti), du magnésium (Mg), du calcium (Ca) et du strontium (Sr),
et dans lequel le nickelate de lithium est choisi dans le groupe constitué d'un nickelate de lithium représenté par une formule empirique du type Li(Ni_{1/3}Co_{1/3}Mn_{1/3})O₂ ; d'un nickelate de lithium qui comprend au moins un modificateur de l'atome de Li choisi dans le groupe constitué du baryum, du magnésium, du calcium et du strontium ; et d'un nickelate de lithium représenté par une formule empirique du type Liₓ₃Ni_{(1-z3)}M'_{z3}O₂ revêtu d'un cobaltate de lithium représenté par une formule empirique du type LiCoO₂ sous forme d'un revêtement à gradient ou d'un revêtement en des points déterminés où :
x3 est supérieur à 0,05 et inférieur à 1,2 ;
z3 est supérieur à 0 et inférieur à 0,5 ; et
M' est au moins l'un des éléments du groupe constitué du cobalt, du manganèse, de l'aluminium, du bore, du titane, du magnésium, du calcium et du strontium ; et
b) au moins l'un parmi un spinelle manganate et un composé d'olivine, dans lequel le spinelle manganate est représenté par une formule empirique du type
Li₍₁₊ₓ₁₎(Mn_{1-y1}A'_{y1})₂₋ₓ₁O_{z1}
où :
x1 est supérieur ou égal à 0,01 et inférieur ou égal à 0,3 ;
y1 est supérieur à 0,0 et inférieur ou égal à 0,3 ;
z1 est supérieur ou égal à 3,9 et inférieur ou égal à 4,1 ; et
A' est au moins l'un des éléments du groupe constitué du magnésium, de l'aluminium, du cobalt, du nickel et du chrome,
et dans lequel le composé d'olivine est représenté par une formule empirique du type
Li₍₁₊ₓ₂₎A"ₓ₂MPO₄
où :
x2 est supérieur ou égal à 0,0 et inférieur ou égal à 0,2 ; et
M est au moins l'un des éléments du groupe constitué du fer, du manganèse, du cobalt et du magnésium ; et
A" est au moins l'un des éléments du groupe constitué du sodium, du magnésium, du calcium, du potassium, du nickel et du niobium ; ou
ii)
a) un nickelate de lithium choisi dans le groupe constitué du nickelate de lithium représenté par une formule empirique du type Li(Ni_{1/3}Co_{1/3}Mn_{1/3})O₂ ; d'un nickelate de lithium qui comprend au moins un modificateur de l'atome de Li choisi dans le groupe constitué du baryum, du magnésium, du calcium et du strontium ; et d'un nickelate de lithium représenté par une formule empirique du type Liₓ₃Ni_{(1-z3)}M'_{z3}O₂ revêtu d'un cobaltate de lithium représenté par une formule empirique du type LiCoO₂ sous forme d'un revêtement à gradient ou d'un revêtement en des points déterminés où :
x3 est supérieur à 0,05 et inférieur à 1,2 ;
z3 est supérieur à 0 et inférieur à 0,5 ; et
M' est au moins l'un des éléments du groupe constitué du cobalt, du manganèse, de l'aluminium, du bore, du titane, du magnésium, du calcium et du strontium ; et
b) un spinelle manganate représenté par une formule empirique du type Li₍₁₊ₓ₇₎Mn_{2-y7}O_{z7} où x7 et y7 sont chacun indépendamment supérieur ou égal à 0,0 et inférieur ou égal à 1,0 ; et z7 est supérieur ou égal à 3,9 et inférieur ou égal à 4,2 ; ou
iii) un manganate de lithium représenté par une formule empirique du type LiMn₂O₄ et un cobaltate de lithium représenté par une formule empirique du type LiCoO₂, dans lequel le rapport pondéral de LiMn₂O₄:LiCoO₂ est de 30:70.

2. Matériau actif de cathode selon la revendication 1 i), dans lequel : (a) le nickelate de lithium qui comprend au moins un modificateur de l'atome de Li comprend en outre au moins un modificateur de l'atome de Ni choisi dans le groupe constitué du baryum, du magnésium, du calcium, du strontium, de l'aluminium, du manganèse et du bore ; ou (b) le matériau de cathode comprend le composé d' olivine de formule Li₍₁₋ₓ₂₎A"ₓ₂MPO₄ où A" et x2 sont tels que définis dans la revendication 1 i) et M est le fer ou le manganèse ; et auquel cas, de manière facultative, dans lequel le composé d'olivine est représenté par une formule empirique du type LiFePO₄ ou LiMnPO₄.

3. Matériau actif de cathode selon la revendication 1 i), dans lequel le matériau de cathode comprend l'un des nickelates de lithium et comprend en outre le spinelle manganate de formule Li₍₁₊ₓ₁₎(M_{1-y1}A'_{y1})₂₋ₓ₁O_{z1} dans laquelle x1, y1, z1 et A' sont tels que définis dans la revendication 1 i) ; et auquel cas, de manière facultative : (a) dans lequel le matériau de cathode comprend le nickelate de lithium de formule Li(Ni_{1/3}Co_{1/3}Mn_{1/3})O₂ ; ou (b) dans lequel le matériau de cathode comprend le nickelate de lithium comprenant au moins un modificateur de l'atome de Li ; et auquel cas, encore de manière facultative, le nickelate de lithium comprend en outre au moins un modificateur de l'atome de Ni choisi dans le groupe constitué du baryum, du magnésium, du calcium, du strontium, de l'aluminium, du manganèse et du bore ; ou (c) dans lequel le matériau de cathode comprend le nickelate de lithium de formule LiNi_{0.8}Co_{0.15}Al_{0.05}O₂ revêtu du cobaltate de lithium de formule LiCoO₂ sous forme d'un revêtement à gradient ou d'un revêtement en des points déterminés ; ou comprend en outre un cobaltate de lithium ; et auquel cas, encore de manière facultative, dans lequel le cobaltate de lithium est représenté par la formule LiCoO₂.

4. Matériau actif de cathode selon la revendication 1 i), dans lequel le matériau de cathode comprend l'un des nickelates de lithium et comprend en outre le spinelle manganate de formule Li₍₁₊ₓ₁₎(Mn_{1-y1}A'_{y1})₂₋ₓ₁O_{z1} dans laquelle x1, y1, z1 et A' sont tels que définis dans la revendication 1 i) ; et le cobaltate de lithium modifié, et auquel cas, de manière facultative, dans lequel le matériau de cathode comprend le nickelate de lithium comprenant au moins un modificateur de l'atome de Li ; et auquel cas, encore de manière facultative : (a) le nickelate de lithium comprend en outre au moins un modificateur de l'atome de Ni choisi dans le groupe constitué du baryum, du magnésium, du calcium, du strontium, de l'aluminium, du manganèse et du bore ; ou (b) dans lequel le matériau de cathode comprend le nickelate de lithium de formule LiNi_{0.8}Co_{0.15}Al_{0.05}O₂ revêtu du cobaltate de lithium de formule LiCoO₂ sous forme de revêtement à gradient ou de revêtement en des points déterminés ; ou (c) dans lequel le matériau de cathode comprend le nickelate de lithium de formule Li(Ni_{1/3}Co_{1/3}Mn_{1/3})O₂.

5. Matériau actif de cathode selon la revendication 1 i), dans lequel : (a) le matériau de cathode comprend le cobaltate de lithium modifié et le spinelle manganate de formule Li₍₁₊ₓ₁₎(Mn_{1-y1}A'_{y1}))₂₋ₓ₁O_{z1} où x1, y1, z1 et A' sont tels que définis dans la revendication 1 i) ; ou (b) le matériau de cathode comprend le cobaltate de lithium modifié et/ou l'un des nickelates de lithium, et comprend en outre le composé d'olivine de formule Li₍₁₋ₓ₂₎A"ₓ₂MPO₄ où x2, A" et M sont tels que définis dans la revendication 1 i) ; et auquel cas, de manière facultative, dans lequel le matériau de cathode comprend le composé d'olivine de formule Li₍₁₋ₓ₂₎A"_{X2}MPO₄ où M est le fer ou le manganèse.

6. Matériau actif de cathode selon la revendication 1 i), dans lequel le matériau de cathode comprend l'un des nickelates de lithium, et comprend en outre le composé d'olivine de formule Li₍₁₋ₓ₂₎A"ₓ₂MPO₄ dans laquelle x2, A" et M sont tels que définis dans la revendication 1 i) ; et auquel cas, de manière facultative : (a) dans lequel le matériau de cathode comprend le nickelate de lithium comprenant au moins un modificateur de l'atome de Li ; et auquel cas encore, de manière facultative, le nickelate de lithium comprend en outre au moins un modificateur de l'atome de Ni choisi dans le groupe constitué du baryum, du magnésium, du calcium, du strontium, de l'aluminium, du manganèse et du bore ; ou (b) dans lequel le matériau de cathode comprend le nickelate de lithium de formule LiNi_{0.8}Co_{0.15}Al_{0.05}O₂ revêtu d'un cobaltate de lithium de formule LiCoO₂ sous forme de revêtement à gradient ou de revêtement en des points déterminés ; ou (c) dans lequel le matériau de cathode comprend le nickelate de lithium de formule Li (Ni_{1/3}Co_{1/3}Mn_{1/3}) O₂.

7. Matériau actif de cathode selon la revendication 1 i), dans lequel : (a) le matériau de cathode comprend le cobaltate de lithium modifié et l'un des nickelates de lithium, et comprend en outre le composé d'olivine de formule Li₍₁₋ₓ₂₎A"ₓ₂MPO₄ ; auquel cas, de manière facultative, soit (i) dans lequel le matériau de cathode comprend le nickelate de lithium de formule LiNi_{0.8}CO_{0.15}Al_{0.05}O₂ revêtu de cobaltate de lithium de formule LiCoO₂ sous forme de revêtement à gradient ou de revêtement en des points déterminés ; ou (ii) dans lequel le matériau de cathode comprend le nickelate de lithium de formule Li(Ni_{1/3}Co_{1/3}Mn_{1/3})O₂ ; ou (b) le matériau de cathode comprend l'un des nickelates de lithium, et comprend en outre le spinelle manganate de formule Li₍₁₊ₓ₁₎(Mn_{1-y1}A'_{y1})₂₋ₓO_{z1} et le composé d'olivine de formule Li₍₁₋ₓ₂₎A"ₓ₂MP₄ ; où x2, A", M et A' sont tels que définis dans la revendication 1 i).

8. Matériau actif de cathode selon la revendication 1 ii), dans lequel : (a) le nickelate de lithium qui comprend au moins un modificateur de l'atome de Li comprend en outre au moins un modificateur de l'atome de Ni choisi dans le groupe constitué du baryum, du magnésium, du calcium, du strontium, de l'aluminium, du manganèse et du bore ; et auquel cas, de manière facultative, dans lequel le spinelle manganate est représenté par une formule empirique du type LiMn₂O₄ ; ou (b) le matériau actif de cathode comprend en outre un cobaltate de lithium ; et auquel cas, de manière facultative, dans lequel le cobaltate de lithium est représenté par une formule empirique du type LiCoO₂ ; ou le mélange comprend en outre un composé d'olivine représenté par une formule empirique du type
Li₍₁₊ₓ₂₎A"ₓ₂MPO₄
où :
x2 est supérieur ou égal à 0,0 et inférieur ou égal à 0, 2 ; et
M est au moins l'un des éléments du groupe constitué du fer, du manganèse, du cobalt et du magnésium ; et
A" est au moins l'un des éléments du groupe constitué du sodium, du magnésium, du calcium, du potassium, du nickel et du niobium.

9. Matériau actif de cathode selon l'une quelconque des revendications 1, 2, 5, 6, 7 et 8, dans lequel x2 est soit :
a) supérieur ou égal à 0,05 et inférieur ou égal à 0,2 ; ou
b) supérieur ou égal à 0,00 et inférieur ou égal à 0,1.

10. Batterie au lithium-ion comportant une cathode qui comprend un matériau actif de cathode, le matériau actif de cathode comprenant un mélange qui comporte :
i)
a) au moins l'un parmi un cobaltate de lithium et un nickelate de lithium,
dans lequel le cobaltate de lithium est un cobaltate de lithium modifié par au moins un modificateur choisi dans le groupe constitué d'un modificateur du lithium et d'un modificateur du cobalt et dans lequel le modificateur du lithium est au moins un élément choisi dans le groupe constitué du magnésium (Mg) et du sodium (Na), et dans lequel le modificateur du cobalt est au moins l'un des éléments du groupe constitué du manganèse (Mn), de l'aluminium (Al), du bore (B), du titane (Ti), du magnésium (Mg), du calcium (Ca) et du strontium (Sr),
et dans lequel le nickelate de lithium est choisi dans le groupe constitué d'un nickelate de lithium représenté par une formule empirique du type Li(Ni_{1/3}Co_{1/3}Mn_{1/3})O₂ ; d'un nickelate de lithium qui comprend au moins un modificateur de l'atome de Li choisi dans le groupe constitué du baryum, du magnésium, du calcium et du strontium ; et d'un nickelate de lithium représenté par une formule empirique du type Liₓ₃Ni_{(1-z3)}M'_{z3}O₂ revêtu d'un cobaltate de lithium représenté par une formule empirique du type LiCoO₂ sous forme d'un revêtement à gradient ou d'un revêtement en des points déterminés où :
x3 est supérieur à 0,05 et inférieur à 1,2 ;
z3 est supérieur à 0 et inférieur à 0,5 ; et
M' est au moins l'un des éléments du groupe constitué du cobalt, du manganèse, de l'aluminium, du bore, du titane, du magnésium, du calcium et du strontium ; et
b) au moins l'un parmi un spinelle manganate et un composé d'olivine, dans lequel le spinelle manganate est représenté par une formule empirique du type Li₍₁₊ₓ₁₎(Mn_{1-y1}A'_{y1})₂₋ₓ₁O_{z1} où :
x1 est supérieur ou égal à 0,01 et inférieur ou égal à 0,3 ;
y1 est supérieur à 0,0 et inférieur ou égal à 0,3 ;
z1 est supérieur ou égal à 3,9 et inférieur ou égal à 4,1 ; et
A' est au moins l'un des éléments du groupe constitué du magnésium, de l'aluminium, du cobalt, du nickel et du chrome,
et dans lequel le composé d'olivine est représenté par une formule empirique du type Li₍₁₋ₓ₂₎A"_{X2}MPO₄ où :
x2 est supérieur ou égal à 0,0 et inférieur ou égal à 0,2 ; et
M est au moins l'un des éléments du groupe constitué du fer, du manganèse, du cobalt et du magnésium ; et
A" est au moins l'un des éléments du groupe constitué du sodium, du magnésium, du calcium, du potassium, du nickel et du niobium ; ou
ii)
a) un nickelate de lithium choisi dans le groupe constitué d'un nickelate de lithium représenté par une formule empirique du type Li(Ni_{1/3}Co_{1/3}Mn_{1/3})O₂ ; d'un nickelate de lithium qui comprend au moins un modificateur de l'atome de Li choisi dans le groupe constitué du baryum, du magnésium, du calcium et du strontium ; et d'un nickelate de lithium représenté par une formule empirique du type Liₓ₃Ni_{(1-z3)}M'_{z3}O₂ revêtu d'un cobaltate de lithium représenté par une formule empirique du type LiCoO₂ sous forme d'un revêtement à gradient ou d'un revêtement en des points déterminés où :
x3 est supérieur à 0,05 et inférieur à 1,2 ;
z3 est supérieur à 0 et inférieur à 0,5 ; et
M' est au moins l'un des éléments du groupe constitué du cobalt, du manganèse, de l'aluminium, du bore, du titane, du magnésium, du calcium et du strontium ; et
b) un spinelle manganate représenté par une formule empirique du type Li₍₁₊ₓ₇₎Mn_{2-y7}O_{z7} où x7 et y7 sont chacun indépendamment supérieur ou égal à 0,0 et inférieur ou égal à 1,0 ; et z7 est supérieur ou égal à 3,9 et inférieur ou égal à 4,2, dans laquelle la batterie a une capacité supérieure à environ 3,0 Ah ; ou comprend un manganate de lithium représenté par une formule empirique du type LiMn₂O₄ et un cobaltate de lithium représenté par une formule empirique du type LiCoO₂, dans laquelle le rapport pondéral de LiMn₂O₄:LiCoO₂ est de 30:70, et dans laquelle la batterie a une capacité supérieure à environ 3,0 Ah.

11. Batterie au lithium-ion selon la revendication 10 i), dans laquelle : (a) le nickelate de lithium qui comprend au moins un modificateur de l'atome de Li comprend en outre au moins un modificateur de l'atome de Ni choisi dans le groupe constitué du baryum, du magnésium, du calcium, du strontium, de l'aluminium, du manganèse et du bore ; ou (b) le matériau de cathode comprend le nickelate de lithium qui comprend au moins un modificateur du Li ; ou (c) le matériau de cathode comprend le nickelate de lithium revêtu du cobaltate de lithium de formule LiCoO₂ sous forme d'un revêtement à gradient ou d'un revêtement en des points déterminés ; auquel cas, de manière facultative, dans lequel le nickelate de lithium est représenté par une formule empirique du type LiNi_{0.8}Co_{0.15}Al_{0.05}O₂ revêtu de cobaltate de lithium de formule LiCoO₂ sous forme d'un revêtement à gradient ou d'un revêtement en des points déterminés ; ou (d) dans laquelle le matériau de cathode comprend le nickelate de lithium de formule Li(Ni_{1/3}Co_{1/3}Mn_{1/3})O₂ ; ou (e) dans laquelle le matériau de cathode comprend un composé d'olivine de formule Li₍₁₋ₓ₂₎A"ₓ₂MPO₄ où M est le fer ou le manganèse et x2 et A" sont tels que définis dans la revendication 10 i) ; auquel cas, de manière facultative, dans laquelle le composé d'olivine est représenté par une formule empirique du type LiFePO₄ ou LiMnPO₄.

12. Batterie au lithium-ion selon la revendication 10 ou la revendication 11, dans laquelle x2 est soit :
a) supérieur ou égal à 0,05 et inférieur ou égal à 0,2 ; ou
b) supérieur ou égal à 0,00 et inférieur ou égal à 0,1.

13. Procédé de formation d'une batterie au lithium-ion, comprenant :
a1) la formation d'un matériau actif de cathode, comprenant un mélange qui comporte :
i) au moins l'un parmi un cobaltate de lithium et un nickelate de lithium, dans lequel le cobaltate de lithium est un cobaltate de lithium modifié par au moins un modificateur choisi dans le groupe constitué d'un modificateur du lithium et d'un modificateur du cobalt du cobaltate de lithium, et dans lequel le modificateur du lithium est au moins un élément choisi parmi le groupe constitué du magnésium (Mg) et du sodium (Na), et dans lequel le modificateur du cobalt est au moins l'un des éléments du groupe constitué du manganèse (Mn), de l'aluminium (Al), du bore (B), du titane (Ti), du magnésium (Mg), du calcium (Ca) et du strontium (Sr),
et dans lequel le nickelate de lithium est choisi dans le groupe constitué d'un nickelate de lithium représenté par une formule empirique du type Li(Ni_{1/3}Co_{1/3}Mn_{1/3})O₂ ; d'un nickelate de lithium qui comporte au moins un modificateur de l'atome de Li choisi dans le groupe constitué du baryum, du magnésium, du calcium et du strontium ; et d'un nickelate de lithium représenté par une formule empirique du type Liₓ₃Ni_{(1-z3)}M'_{z3}O₂ revêtu d' un cobaltate de lithium représenté par une formule empirique du type LiCoO₂ sous forme d'un revêtement à gradient ou d'un revêtement en des points déterminés où :
x3 est supérieur à 0,05 et inférieur à 1,2 ;
z3 est supérieur à 0 et inférieur à 0,5 ; et
M' est au moins l'un des éléments du groupe constitué du cobalt, du manganèse, due l'aluminium, du bore, du titane, du magnésium, du calcium et du strontium ; et
ii) au moins l'un parmi un spinelle manganate et un composé d'olivine, dans lequel le spinelle manganate est représenté par une formule empirique du type Li₍₁₊ₓ₁₎(Mn_{1-y1}A'_{y1})₂₋ₓ₁O_{z1} où :
x1 est supérieur ou égal à 0,01 et inférieur ou égal à 0,3 ;
y1 est supérieur à 0,0 et inférieur ou égal à 0,3 ;
z1 est supérieur ou égal à 3,9 et inférieur ou égal à 4,1 ; et
A' est au moins l'un des éléments du groupe constitué du magnésium, de l'aluminium, du cobalt, du nickel et du chrome,
et dans lequel le composé d'olivine est représenté par une formule empirique du type Li₍₁₋ₓ₂₎A"ₓ₂MPO₄ où :
x2 est supérieur ou égal à 0,0 et inférieur ou égal à 0,2 ; et
M est au moins l'un des éléments du groupe constitué du fer, du manganèse, du cobalt et du magnésium ; et
A" est au moins l'un des éléments du groupe constitué du sodium, du magnésium, du calcium, du potassium, du nickel et du niobium ; ou
a2) la formation d'un matériau actif de cathode, comprenant un mélange qui comporte :
i) un nickelate de lithium choisi dans le groupe constitué d'un nickelate de lithium représenté par une formule empirique du type Li(Ni_{1/3}CO_{1/3}Mn_{1/3})O₂ ; d'un nickelate de lithium qui comprend au moins un modificateur de l'atome de Li choisi dans le groupe constitué du baryum, du magnésium, du calcium et du strontium; est d'un nickelate de lithium représenté par une formule empirique du type Liₓ₃Ni_{(1-z3)}M'_{z3}O₂ revêtu d'un cobaltate de lithium représenté par une formule empirique du type LiCoO₂ sous forme d'un revêtement à gradient ou d'un revêtement en des points déterminés où :
x3 est supérieur à 0,05 et inférieur à 1,2 ;
z3 est supérieur à 0 et inférieur à 0,5 ; et
M' est au moins l'un des éléments du groupe constitué du cobalt, du manganèse, de l'aluminium, du bore, du titane, du magnésium, du calcium et du strontium ; et
ii) un spinelle manganate représenté par une formule empirique du type Li₍₁₊ₓ₇₎Mn_{2-y7}O_{Z7} où x7 et y7 sont chacun indépendamment supérieur ou égal à 0,0 et inférieur ou égal à 1,0 ; et z7 est supérieur ou égal à 3,9 et inférieur ou égal à 4,2 ; dans lequel la batterie au lithium-ion a une capacité supérieure à environ 3,0 Ah/cellule ; ou
a3) la formation d'un matériau actif de cathode comprenant un mélange qui comprend un manganate de lithium représenté par une formule empirique du type LiMn₂O₄ et un cobaltate de lithium représenté par une formule empirique du type LiCoO₂, dans lequel le rapport pondéral de LiMn₂O₄: LiCoO₂ est de 30:70 ; et dans lequel la batterie au lithium-ion a une capacité supérieure à environ 3,0 Ah/cellule ;
b) la formation d'une électrode de cathode avec le matériau actif de cathode de a1), a2) ou a3) ; et
c) la formation d'une électrode d'anode en contact électrique avec la cathode via un électrolyte, formant ainsi la batterie au lithium-ion.

14. Procédé de formation d'une batterie au lithium-ion selon la revendication 13, dans lequel x2 est soit :
a) supérieur ou égal à 0,05 et inférieur ou égal à 0,2 ; ou
b) supérieur ou égal à 0,00 et inférieur ou égal à 0,1.

15. Empilement de batteries comprenant une pluralité de cellules, dans lequel chacune des cellules comprend un matériau actif de cathode selon l'une quelconque des revendications 1 à 9 ; et auquel cas, de manière facultative : (a) dans lequel la capacité des cellules est supérieure ou égale à environ 3,3 Ah/cellule ; ou (b) dans lequel l'impédance interne des cellules est inférieure à environ 50 milliohms ; ou (c) dans lequel les cellules sont en série et aucune cellule n'est connectée en parallèle.

16. Système comprenant :
a) un dispositif électronique mobile ; et
b) un empilement de batteries qui comprend une pluralité de cellules, chacune des cellules étant connectée aux autres, dans lequel chacune des cellules comprend un matériau actif de cathode selon l'une quelconque des revendications 1 à 9 ; et auquel cas, de manière facultative, dans lequel le dispositif électronique mobile est choisi dans le groupe constitué d'un ordinateur portable, d'un outil électrique, d'un PDA, d'un téléphone cellulaire et d'un véhicule électrique hybride.
